# EUROPEAN PATENT APPLICATION

(11) **EP 4 763 702 A1**
(43) Date of publication of application: **24.06.2026**
(21) Application number: 25223957.9
(22) Date of filing: 16.12.2025
(51) Int. Cl.: B64D 13/04

(54) **CABIN PRESSURE CONTROL SYSTEM**

(30) Priority: 23.12.2024 US 202419000054
(71) Applicant: HONEYWELL INTERNATIONAL INC., Charlotte, NC 28202 (US)
(72) Inventor: HORNER, Darrell W., Charlotte, 28202 (US)
(74) Representative: Haseltine Lake Kempner LLP

(57) **Abstract**

In some examples, a cabin pressure control system includes a valve system including a valve configured to fluidically couple an internal environment internal to an aircraft and external environment external to the aircraft. The valve system includes a primary controller, a secondary controller, a first valve control system, and a second valve control system. The primary controller is configured to control a first outflow valve and a second outflow valve. The secondary controller is configured to control the first outflow valve and the second outflow flow when the primary controller is unavailable or ineffective. The first valve control system is configured to control the first outflow valve and the second outflow flow when the secondary controller is unavailable or ineffective. The second valve control system is configured to control the first outflow valve and the second outflow flow when the first valve control system is unavailable or ineffective.

## Description

### TECHNICAL FIELD

The disclosure relates to aircraft cabin air pressure control.

### BACKGROUND

Vehicles, such as aircraft, may have a pressurized cabin to provide comfort and sufficient oxygen to a flight crew as well as passengers. In some examples, bleed air from the aircraft engines, or an engine driven air pump, may provide pressure to the aircraft interior. An outflow valve (OFV) may be used to release pressure from inside the cabin to the atmosphere to keep the internal cabin pressure within a desirable range. Some aircraft are equipped with a cabin pressure control system (CPCS) to maintain the cabin pressure altitude to within a relatively comfortable range (e.g., below approximately 8,000 feet). The CPCS may automatically allow gradual changes in the cabin pressure altitude to keep passengers and crew comfortable and maintain a cabin-to-atmosphere differential pressure below nominal and maximum limits.

### SUMMARY

In examples, a pressure control system for a compartment of a vehicle, the system comprises: a primary controller configured to issue a first command and configured to issue a third command; a secondary controller configured to issue a second command and configured to issue a fourth command; a first valve configured to fluidically couple an internal environment within the compartment and an external environment surrounding the vehicle; a first valve control system including a first auto controller and a first backup controller, wherein the first valve control system is configured to operate the first valve by one of providing the first command to the first auto controller or providing the second command to the first backup controller; a second valve configured to fluidically couple the internal environment and the external environment; and a second valve control system including a second auto controller and a second backup controller, wherein the second valve control system is configured to operate the second valve by one of providing the third command to the second auto controller or providing the fourth command to the second auto controller, wherein the first valve control system is configured to provide the second command to the first backup controller and the second valve control system is configured to provide the fourth command to the second auto controller when the primary controller fails to send the first command or fails to send the third command, or when the first command fails cause the operation of the first valve, or when the third command fails to cause the operation of the second valve, wherein the first backup controller is configured to issue a first backup command and issue a second backup command when the secondary controller fails to send the second command or fails to send the fourth command, or when the second command fails to cause the operation of the first valve, or when the fourth command fails to cause the operation of the second valve, and wherein the first backup controller is configured to operate the first valve using the first backup command and the second backup controller is configured to operate the second valve using the second backup command.

In examples, a pressure control system for a compartment of a vehicle, the system comprises: a primary controller configured to issue a first command and configured to issue a third command; a secondary controller configured to issue a second command and configured to issue a fourth command; a first valve configured to fluidically couple an internal environment of the compartment and an external environment surrounding the vehicle; a first valve control system including a first auto controller and a first auto motor and including a first backup controller and a first backup motor, wherein the first valve control system is configured to operate the first valve by one of providing the first command to the first auto controller to cause the first auto motor to produce a first mechanical power, or providing the second command to the first backup controller to cause the first backup motor to produce a second mechanical power; a second valve configured to fluidically couple the compartment and the external environment; and a second valve control system including a second auto controller and a second auto motor and including a second backup controller and a second backup motor, wherein the second valve control system is configured to operate the second valve by one of providing the third command to the second auto controller to cause the second auto motor to produce a third mechanical power, or providing the fourth command to the second auto controller to cause the second auto motor to produce a fourth mechanical power, wherein the first valve control system is configured to provide the second command to the first backup controller and the second valve control system is configured to provide the fourth command to the second auto controller when the primary controller fails to send the first command or fails to send the third command, or when the first command fails cause the operation of the first valve, or when the third command fails to cause the operation of the second valve, wherein the first backup controller is configured to issue a first backup command and issue a second backup command when the secondary controller fails to send the second command or fails to send the fourth command, or when the second command fails to cause the operation of the first valve, or when the fourth command fails to cause the operation of the second valve, wherein the second backup controller is configured to issue a third backup command and issue a fourth backup command when the first backup controller fails to send the first backup command or fails to send the fourth backup command, or when the first backup command fails to cause the operation of the first valve, or when the second backup command fails to cause the operation of the second valve, and wherein the first backup controller is configured to operate the first valve using the first backup command or the third backup command and the second backup controller is configured to operate the second valve using the second backup command or the fourth backup command.

In an examples, a method comprises: operating, by a first valve control system, a first valve by one of providing a first command issued by a primary controller to a first auto controller or providing a second command issued by a secondary controller to a first backup controller; operating, by a second valve control system, a second valve by one of providing a third command issued by the primary controller to a second auto controller or providing a fourth command issued by the secondary controller to a first backup controller, wherein the first valve control system provides the second command and the second valve control system provides the fourth command if the primary controller fails to send the first command or fails to send the third command, or if the first command fails cause the operation of the first valve, or if the third command fails to cause the operation of the second valve; and operating, using the first backup controller, the first valve using a first backup command issued by the first backup controller and the second valve using a second backup command issued by the first backup controller if the secondary controller fails to send the second command or fails to send the fourth command, or if the second command fails to cause the operation of the first valve, or if the fourth command fails to cause the operation of the second valve, wherein the first backup controller is configured to operate the first valve using the first backup command the second backup controller is configured to operate the second valve using the second backup command.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a schematic illustration of a portion of a vehicle including a system configured to control a pressure of an internal environment of a compartment of the vehicle using a first valve and a second valve.
FIG. 2 is a schematic flow diagram of the system in a first mode.
FIG. 3 is a schematic flow diagram of the system in a second mode.
FIG. 4 is a schematic flow diagram of the system in a third mode.
FIG. 5 is a schematic flow diagram of the system in a first backup mode.
FIG. 6 is a schematic flow diagram of the system in a second backup mode.
FIG. 7 is a schematic flow diagram of the system in a manual mode.
FIG. 8 is a schematic illustration of the system including a first valve control system and a second valve control system.
FIG. 9 is a schematic illustration of a valve control system configured to control one of the first valve or the second valve.
FIG. 10 is a flow diagram illustrating an example method of controlling a pressure of the compartment of the vehicle.

### DETAILED DESCRIPTION

Aircraft often fly at altitudes necessitating pressurization of one or more aircraft cabins to simulate conditions at lower altitudes to, for example, facilitate the comfort of passengers and crew during flight. Typically, air is provided via an onboard system (e.g., a compressor side of a turbine engine, or another system) and conditioned by an environmental control system (ECS) before being provided to the cabin as a pressurized air flow. An internal pressure of the cabin may be controlled by a cabin pressure control system (CPCS) during flight and/or other operations of the aircraft. For example, at increased altitudes where external environments surrounding the aircraft may be thinner and less able or insufficient to support human life, the CPCS may control the cabin internal pressure to substantially simulate a higher pressure atmospheric condition found at lower altitudes. This enables the aircraft to simulate the conditions of lower altitudes as the aircraft operates at the higher altitudes where the aircraft may be more efficient.

The aircraft may be required to discharge (e.g., vent) air from the relatively higher pressure cabin to the relatively lower pressure external environment (e.g., as the ECS provides air flow to the cabin) in order to maintain the cabin pressure within a desired range during flight operations and/or for other reasons. This air discharge may be driven (e.g., motivated to flow) at least in part by a differential pressure between the cabin and the external environment. This differential pressure is largely dependent on the altitude of the aircraft. For example, when the aircraft operates at higher altitudes, the differential pressure between the cabin and the external environment surrounding the aircraft is generally greater than when the aircraft operates at lower altitudes, due at least in part to the external environment becoming relatively thinner as the altitude increases. The CPCS may be configured to substantially control this air discharge (e.g., using one or more systems and/or aircraft components) based on the differential pressure experienced and/or expected during flight operations of the aircraft.

The CPCS may be configured to control the air discharge by controlling one or more outflow valves which discharge the air flow from the cabin to the external environment. For example, an outflow valve may be in fluidic communication with a conduit or other component and/or system at least partially defining a flow path for a fluid from the cabin to the external environment surrounding the aircraft. In some examples, the outflow valve is configured and/or positioned on the aircraft such that air exhausted from the cabin provides forward thrust to the aircraft. This forward thrust may be in addition to a forward thrust provided by an engine of the aircraft.

Typically, pressurization might be controlled (e.g., by the CPCS) to maintain a cabin pressure corresponding to about 6000 to 8000 feet above sea level. Further, when taking off from air fields that are less than 6000 to 8000 feet, the pressurization may be controlled to maintain a cabin pressure that is greater than the ambient pressure around the aircraft that is climbing from the takeoff field elevation to altitudes that are greater than 6000 to 8000 feet. Hence, at aircraft altitudes that are less than 6000 to 8000 feet, and at altitudes in excess of 6000 to 8000 feet, a positive pressure differential is expected to develop between the cabin and the external environment surrounding the aircraft. For example, for an aircraft operating at about 45,000 feet, the pressure differential might be about 10 pounds per square inch differential (PSID). At aircraft altitudes lower than 45,000 feet, the pressure differential pressure may be less than 10 pounds per square inch differential (PSID).

Further, for example during aircraft descent, if the cabin pressurized does not result in a pressure greater than the pressure that surrounds the airplane, the pressure surrounding the airplane (ambient pressure) may exceed the pressure in the pressurized cabin. This is called "negative" pressure differential. As the airplane descends "through" the cabin, the negative pressure differential can build up to -0.36 PSID.

Aircraft with pressurized cabins are designed with fuselage structural strengths sufficient to these anticipated pressure differentials. However, exposing a fuselage to pressure differentials in excess of that anticipated risks overstressing the fuselage and, in an extreme case, risking structural failure. Excess positive or negative pressure differential might occur if there is a malfunction or failure of the CPCS. In order to mitigate the risk, aircraft may be provided with safety valves (e.g., pressure relief valves) which operate (e.g., independent of the rest of the CPCS) to limit the pressure differentials between the cabin and the external environment. In some cases, the safety valve may be intended to limit both positive and negative pressure differentials. In some cases, one safety valve is intended to limit positive pressure differentials and another safety valve is intended to limit negative pressure differentials.

In many cases, a safety valve may be pneumatically actuated such that, for an aircraft with all-electric outflow valves, the safety valve is not routinely testable. Rather, a safety valve may be substantially limited to periodic testing which occurs during an aircraft's scheduled maintenance cycle. Hence, in some cases (e.g., depending on CPCS architecture), a loss of functionality of a safety valve (e.g., a pneumatically actuated safety valve) may remain dormant or latent between scheduled testing events.

The present disclosure describes a pressure control system configured to control a first outflow valve ("first valve OFV-1") and a second outflow valve ("second valve OFV-2") to control a pressure within a compartment of a vehicle (e.g., within a cabin of an aircraft) and/or a differential pressure between the compartment and an external environment surrounding the vehicle. First valve OFV-1 is configured to be operated using a first valve control system. Second valve OFV-2 is configured to be operated by a second valve control system. The first valve control system includes a first auto motor controller configured to control a first auto motor and a first backup motor controller configured to control a backup motor. Either of the first auto motor or the first backup motor may be utilized by the first valve control system to cause operation of first valve OFV-1. Similarly, the second valve control system includes a second auto motor controller configured to control a second auto motor and a second backup motor controller configured to control a second backup motor, and is configured to use either of the second auto motor or the second backup motor to operate second valve OFV-2. Hence, each of the first valve control system and the second valve control system are configured to provide for redundancy and failure response should an auto motor or a backup motor fail to cause the operation of an overflow valve.

The first valve control system is configured to receive a first motor command and a second motor command. The first valve control system is configured to cause the operation of first valve OFV-1 by providing the first motor command to the first auto motor. The first valve control system is further configured to cause the operation of first valve OFV-1 by providing the second motor command to the first backup motor. In examples, the first valve control system is configured to operate first valve OFV-1 by either providing the first motor command to the first auto motor or providing the second motor command to the first backup motor (e.g., such that the first auto motor and the first backup motor do not attempt concurrent operation of first valve OFV-1). In some examples, the first valve control system is configured to preferentially provide the first motor command to the first auto motor, and configured to provide the second motor command to the first backup motor only when the first motor command is unavailable or unable to be provided to the first auto motor.

The second valve control system is configured to receive a third motor command and a fourth motor command. The second valve control system is configured to cause the operation of second valve OFV-2 by providing the third motor command to the second auto motor and by providing the fourth motor command to the second auto motor. In some examples, the second valve control system is configured to cause the operation of second valve OFV-2 by providing the third motor command to the second backup motor. In examples, the second valve control system is configured to operate second valve OFV-2 by either providing the third motor command to the second auto motor, providing the fourth motor command to the second auto motor, or providing the third motor command to the second backup motor (e.g., such that the second auto motor does not receive conflicting commands). In some examples, the second valve control system is configured to preferentially provide the third motor command to the second auto motor (or the second backup motor in some examples), and configured to provide the fourth motor command to the second auto motor only when the third motor command is unavailable or unable to be provided to the second auto motor.

Stated similarly, the first valve control system may be configured to provide the first motor command to the first auto motor and (e.g., if the first motor command is unavailable or ineffective) provide the second motor command to the first backup motor to cause the operation of first valve OFV-1. The second valve control system may be configured to provide the third motor command to the second auto motor (or the second backup motor in some examples) and (e.g., if the third motor command is unavailable or ineffective) provide the fourth motor command to the second auto motor.

In a first mode of operation, the pressure control system may be configured such that the first valve control system uses the first motor command and the first auto motor for the operation of first valve OFV-1, and the second valve control system uses the third motor command and the second auto motor for the operation of second valve OFV-2, such that the first motor command and the third motor command cause the operation of first valve OFV-1 and second valve OFV-2. In a second mode of operation (e.g., if the first mode becomes unavailable or ineffective), the pressure control system may be configured such that the first valve control system uses the second motor command and the first backup motor for the operation of OFV-1, and the second valve control system uses the fourth motor command and the second auto motor for the operation of OFV-2, such that the second motor command and the fourth motor command cause the operation of first valve OFV-1 and second valve OFV-2. In a third mode of operation, the pressure control system may be configured such that the first valve control system uses the first motor command and the first auto motor for the operation of first valve OFV-1, and the second valve control system uses the third motor command and the second backup motor (e.g., rather than the second auto motor as in the first mode) for the operation of second valve OFV-2, such that, in the third mode, the first motor command and the third motor command cause the operation of first valve OFV-1 and second valve OFV-2. During operation, the pressure control system (e.g., the first valve control system and the second valve control system) may be configured such that, should the first mode become unavailable or ineffective, the pressure control system transitions from the first mode of operation to one of the second mode of operation or the third mode of operation, such that the pressure control system maintains positive control of first valve OFV-1 and second valve OFV-2.

The pressure control system includes a primary controller and a secondary controller. The primary controller is configured to issue the first motor command and the third motor command. The secondary controller is configured to issue the second motor command and the fourth motor command. In examples, the pressure control system is configured such that the primary controller and the secondary controller may detect internal faults and communicate faults signals indicative of detected fault (e.g., at least indicative of the detection of the fault). For example, the primary controller may be configured to issue a first fault signal in response to a detected fault in the primary controller and communicate the first fault signal to the secondary controller and/or other systems within the pressure control system. The secondary controller may be configured to issue a second fault signal in response to a detected fault in the secondary controller and communicate the second fault signal to the secondary controller and/or other portions of the pressure control system. The first fault signal and/or the second fault signal may be in response to, for example, invalid power to a controller, a state of a watchdog timer (e.g., an overflow), an internal fault detected by a microprocessor of the controller, and/or due to another detected fault.

The pressure control system may be configured such that, in the first mode, the primary controller controls the operation of first valve OFV-1 and second valve OFV-2 using the first motor command provided to the first valve control system and the third motor command provided to the second valve control system. The first valve control system may be configured to substantially ignore or disregard the second motor command and the second valve control system may be configured to substantially ignore or disregard the fourth motor command in the first mode. In examples, in the first mode, the primary controller sends the third motor command to the secondary controller, and the secondary controller provides the third motor command to the second valve control system (e.g., the primary controller acts as a master controller and the secondary controller acts as a worker controller).

The pressure control system may be configured to transition from the first mode to the second mode (e.g., in response to a first fault signal from the primary controller), such that the secondary controller controls the operation of first valve OFV-1 and second valve OFV-2 using the second motor command provided to the first valve control system and the fourth motor command provided to the second valve control system. The first valve control system may be configured to substantially ignore or disregard the first motor command (e.g., if present from the primary controller) and the second valve control system may be configured to substantially ignore or disregard the third motor command (e.g., if present from the primary controller) in the second mode.

The pressure control system may be configured to transition from the first mode to the third mode (e.g., in response to a second fault signal from the secondary controller), such that the primary controller continues to control the operation of first valve OFV-1 using the first motor command and control the operation of second valve OFV-2 using the third motor command. However, in the third mode, the pressure control system may be configured such that the primary controller substantially bypasses the secondary controller to provide the third motor command to the second valve control system (e.g., due to the second fault signal from the secondary controller). Hence, when the pressure control system is operating in the first mode, and when the secondary controller is acting as a worker controller to substantially relay the third motor command from the primary controller to the second valve control system, a fault in the secondary controller may cause the pressure control system to transition to the third mode, such that the primary controller substantially bypasses the secondary controller to provide the third motor command.

In examples, at least one valve control system (e.g., at least one of the first valve control system and/or the second valve control system) includes a controller configured to issue backup motor commands to cause the operation of first valve OFV-1 and second valve OFV-2. In examples, the valve control system is configured to issue a first backup motor command to the first backup motor and a second backup motor command to the second backup motor. For example, the valve control system may be configured to send the first backup motor command and the second backup motor command in response to the second fault signal (e.g., indicating a fault in the secondary controller). Hence, the pressure control system may be configured such that (e.g., when operating in the second mode such that the secondary controller is controlling first valve OFV-1 and second valve OFV-2), a detected fault in the secondary controller causes the valve control system to issue the first backup motor command to the first backup motor and the second backup motor command to the second backup motor, such that the pressure control system maintains positive control of first valve OFV-1 and second valve OFV-2.

Hence, the pressure control system may be configured such that, in the first mode, the primary controller controls the operation of first valve OFV-1 using the first motor command and controls the operation of second valve OFV-2 using the third motor command. Should the primary controller experience a fault and/or the should the first motor command and/or the third motor command become ineffective for the operation of first valve OFV-1 and/or second valve OFV-2, the pressure control system may transition to the second mode wherein the secondary controller controls the operation of first valve OFV-1 using the second motor command and controls the operation of second valve OFV-2 using the fourth motor command. Should the secondary controller experience a fault and/or the should the second motor command and/or the fourth motor command become ineffective for the operation of first valve OFV-1 and/or second valve OFV-2, the pressure control system may transition to a backup mode wherein a valve control system (e.g., one of the first valve control system and/or the second valve control system) controls the operation of first valve OFV-1 using the first backup motor command and controls the operation of second valve OFV-2 using the second backup motor command.

Further, in the first mode when the secondary controller is acting as a worker controller, should the secondary controller experience a fault, the pressure control system may transition to the third mode wherein the third motor command substantially bypasses the secondary controller. The pressure control system may be configured such that, when operating in the third mode, and if the primary controller experiences a fault and/or the first motor command and/or the third motor command becomes ineffective for the operation of first valve OFV-1 and/or second valve OFV-2, the pressure control system may transition from the third mode to the backup mode.

In some examples, the primary controller is configured to communicate the third motor command to the secondary controller, and the secondary controller is configured to provide (e.g., to relay) the third motor command to the second valve control system. Thus in some examples, at least in the first mode and regarding the third motor command, the pressure control system may be configured such that the primary controller acts as a master controller and the secondary controller acts as a worker controller.

The pressure control system includes a manual controller configured to provide manual control of first valve OFV-1 and second valve OFV-2. The manual controller may include a manual actuator configured to be operable by an operator (e.g., a pilot) of a vehicle. The pressure control system may be configured such that a manual command issued from the manual controller causes the first valve control system and/or the second valve control system to substantially overrides control of first valve OFV-1 and/or second valve OFV-2 by the primary controller and the secondary controller. In examples, the manual controller is configured to issue a manual command to at least one valve control system (e.g., the first valve assembly and/or the second valve assembly). The pressure control system may be configured such that the manual command causes the valve control system to control a position of first valve OFV-1 and/or second valve OFV-1 based on the manual command. Thus, the pressure control system may be configured such that an operator (e.g., the pilot) may substantially transition the pressure control system from the first mode, the second mode, the third mode, and/or the backup mode to a manual mode wherein the operator controls the position of first valve OFV-1 and/or second valve OFV-1.

The pressure control system is configured to cause the operation of first outflow valve OFV-1 based on both a cabin pressure of the vehicle (e.g., an aircraft) and a differential pressure between the cabin pressure and an external pressure of an environment external to the vehicle (e.g., external to the aircraft). The primary controller and/or the secondary controller may be configured to determine the cabin pressure (e.g., using one or more cabin pressure sensors) and determine the external pressure (e.g., using data from an air data system (ADS)). The primary controller and/or the secondary controller may determine the differential pressure by determining the difference between the cabin pressure and the external pressure, or receive the differential pressure as differential pressure data (e.g., from the ADS). The primary controller and/or the secondary controller may be configured to cause operation of first valve OFV-1 and/or second valve OFV-2 based on the cabin pressure and the differential pressure.

In examples, a valve control system (e.g., at least one of the first valve control system and/or the second valve control system) is configured to determine at least the differential pressure to, for example, serve as a backup to the differential pressure determination of the primary controller and/or the secondary controller. The valve control system may be configured to determine the cabin pressure to, for example, serve as a backup to the cabin pressure of the primary controller and/or the secondary controller. In examples, the valve control system is configured to determine the differential pressure and/or the cabin pressure using a separate sensor that is separate from the one of more sensors used by the primary controller and/or the secondary controller. The valve control system may be configured to cause the operation of first valve OFV-1 and/or second valve OFV-2 based on at least the differential pressure sensed by the valve control system. For example, the valve control system may be configured to cause the operation of first valve OFV-1 and/or second valve OFV-2 when the differential pressure is greater than or equal to a threshold.

As used herein, a differential pressure may refer to a positive differential pressure wherein a pressure within a compartment of a vehicle (e.g., a cabin pressure) is greater than an external pressure of an environment external to the vehicle, or the differential pressure may refer to a negative differential pressure wherein the pressure within the compartment of the vehicle (e.g., the cabin pressure) is less than the external pressure of the environment external to the vehicle. In examples, when the differential pressure is greater than or equal to a threshold, this may refer to an absolute value of a positive differential pressure being greater than or equal to an absolute value of a first threshold, or may refer to an absolute value of a negative differential pressure being greater than or equal to an absolute value of a second threshold. In examples, the first threshold is indicative of a threshold for a positive differential pressure and/or the second threshold is indicative of a threshold for a negative differential pressure.

The valve control system (e.g., at least one of the first valve control system and/or the second valve control system) may be configured to substantially confirm that the differential pressure sensed is greater than or equal to the threshold using a software circuit. For example, the valve control system may include a main MCU (e.g., a first microprocessor) and a sensor MCU (e.g., a second microprocessor). Both the main MCU and the sensor MCU may be configured to receive a sensed differential pressure from the separate sensor. If the sensor MCU assesses the sensed differential pressure as greater than the threshold, the sensor MCU may issues a first signal to a comparative device. If the main MCU assesses the sensed differential pressure as greater than the threshold, the main MCU may issue a second signal to the comparative device. The comparative device is configured such that both the first signal and the second signal must be received before the valve control system may override the primary controller and the secondary controller to cause the operation of first valve OFV-1 and/or second valve OFV-2.

In examples, the primary controller is one of a first cabin pressure control system controller ("CPCS-1") or a second cabin pressure control system controller ("CPCS-2") and the secondary controller is the other of CPCS-1 or CPCS-2. In examples, the first valve control system is one of a first valve operation system ("system VO-1") configured to control a first valve V- 1 or a second valve operation system ("system VO-2") configured to control a second valve V-2, and the second valve control system is the other of VO-1 or VO-2. In examples, when the primary controller is CPCS-1 and the secondary controller is CPCS-2, the first valve control system is system VO-1 and the second valve control system is system VO-2. First valve OFV-1 may be valve V-1 when the first valve control system is system VO-1 and second valve OFV-2 may be valve V-2 when the second valve control system is system VO-2. Hence, the system is configured such that either of CPCS-1 or CPCS-2 acts as the primary controller when the other of CPCS-1 or CPCS-2 acts as the secondary controller.

In examples, the pressure control system is configured to track which of CPCS-1 or CPCS-2 acts as the primary controller. The pressure control system may be configured to switch CPCS-1 and CPCS-2 operation based on the tracking. For example, the pressure control system may be configured to track which one of CPCS-1 or CPCS-2 functioned as the primary controller during a first operation of the pressure control system (e.g., during a first flight of an aircraft). The pressure control system may be configured to cause the other of CPCS-1 or CPCS-2 to function as the primary controller during a second operation of the pressure control subsequent to the first operation (e.g., during a second flight subsequent to the first flight).

While an aircraft is primarily referred to herein, the pressure control system and methods described herein can be used with other vehicles, including marine vehicles and/or land vehicles.

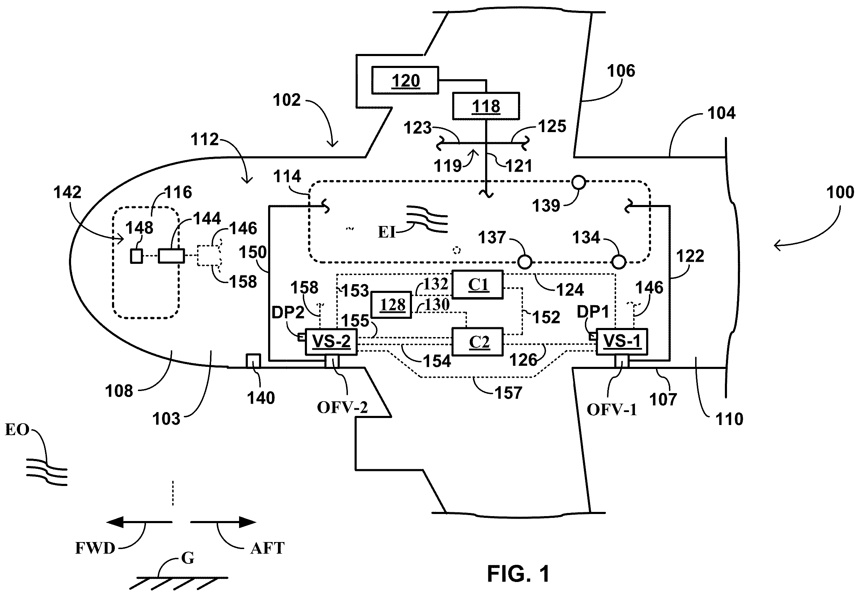

FIG. 1 schematically illustrates a system 100 configured to control a pressure of an internal environment EI (e.g., air) within one or more compartments 112 ("compartments 112") of a vehicle 102. In examples, vehicle 102 (e.g., an aircraft) includes a fuselage 104 and wing 106 coupled (e.g., affixed) to fuselage 104. In examples, vehicle 102 includes a body 103 ("vehicle body 103") defining a forward portion 108 and an aft portion 110. In examples, vehicle 102 is configured to travel (e.g., during flight operations) in at least a forward direction FWD (e.g., a direction from aft portion 110 towards forward portion 108) relative to ground G (e.g., earth's surface). In examples, vehicle 102 is configured to travel (e.g., during flight operations) through an external environment EO substantially external to and/or surrounding vehicle 102. Compartments 112 ("compartments 112") may include one or compartments such as cabin 114, flight deck 116, and/or other compartments of vehicle 102 (e.g., one or more cargo holds, galleys, lavatories, and/or other compartments). In examples, compartments 112 are supported by and/or housed within fuselage 104.

System 100 includes a controller C1 (e.g., one of a first cabin pressure control system (CPCS-1) or a second cabin pressure control system (CSPS-2)) configured to control and/or regulate a pressure within compartments 112 during flight and other operations of vehicle 102. System 100 includes a controller C2 (e.g., the other of CSPS-1 or CSPS-2) configured to control and/or regulate the pressure within compartments 112. In examples, controller C1 and/or controller C2 are configured to substantially control a discharge of a fluid (e.g., air) from internal environment EI within compartments 112 to an external environment EO surrounding vehicle body 103. Vehicle 102 may be configured to separate compartments 112 and external environment EO using some portion of vehicle body 103, such as a bulkhead 107 (e.g., an aircraft exterior skin).

Vehicle 102 may include an environmental control system 118 ("ECS 118") configured to provide an inlet fluid flow (e.g., a pressurized air flow) to compartments 112. ECS 118 may be configured to receive the inlet fluid flow from one or more compressor stages of an engine 120 (e.g., an aircraft engine) supported by vehicle body 103, an electric air compressor, a turbo-compressor, and/or another fluid source configured to provide the inlet fluid flow (e.g., an air flow) to ECS 118. In examples, ECS 118 is configured to provide the inlet fluid flow to compartments 112 via an air supply system 119. Air supply system 119 may include a first section 121 (e.g., a first branch) configured to deliver some portion of the inlet fluid flow to cabin 114, a second section 123 (e.g., a second branch) configured to deliver another portion of the inlet fluid flow to flight deck 116, and/or one or more others sections 125 configured to deliver one or more other portions of the inlet fluid flow to one or more other compartments of vehicle 102. Air supply system 119 may include a variety of components for transporting and dispersing the inlet fluid flow into compartments 112 including, but not limited to supply ducting, supply air vents, gaspers, and the like. The supply ducting, supply air vents, gaspers, and the like may be distributed throughout compartments 112.

System 100 is configured to control first valve OFV-1 and second valve OFV-2 using only one of controller C1 or controller C2. Stated similarly, in examples, system 100 is configured such that, in a first mode of operation, controller C1 controls the operation of first valve OFV-1 and second valve OFV-2, and in a second mode (e.g., when controller C1 is faulted), controller C2 controls the operation of first valve OFV-1 and OFV-2. In some examples, system 100 is configured such that, in the first mode, controller C1 controls the operation of second valve OFV-2 via controller C2 (e.g. using a communication link 152) and controller C2 merely relays the commands of controller C1 (e.g., controller C2 is a worker controller). System 100 may be configured to such that, in a third mode of operation, controller C1 controls the operation of first valve OFV-1 and second valve OFV-2 in a manner which substantially bypasses controller C2 (e.g., when controller C2 is faulted).

Controller C1 and/or controller C2 may control first valve OFV-1 and second valve OFV-2 to control a pressure of internal environment EI within compartments 112. For example, controller C1 and/or controller C2 may receive a pressure signal from a cabin sensor 134 configured to sense the pressure of internal environment EI. Controller C1 and/or controller C2 may be configured to cause the operation of first valve OFV-1 and second valve OFV-2 based on comparison of the pressure signal from cabin sensor 134 with a pressure setpoint (e.g., a pressure setpoint corresponding to about 6000 to 8000 feet above sea level). Hence, controller C1 and/or controller C2 may cause operation of first valve OFV-1 and second valve OFV-2 to keep a pressure of internal environment EI proximate the pressure setpoint for the comfort and safety of passengers and crew during flight operations of vehicle 102.

Although cabin sensor 134 is depicted as a single sensor in FIG. 1 for illustrative purposes, cabin sensor 134 may comprise one or more sensors configured to sense the pressure of internal environment EI.

System 100 is further configured to allow a manual operation of OFV-1 and/or OFV-2 (e.g., to substantially override and/or disable operations of OFV-1 or OFV-2 commanded by controller C1 or controller C2). For example, a manual system 142 (e.g., located in flight deck 116) may be configured to provide a manual control of first valve OFV-1 and/or second valve OFV-2 and substantially override and/or disable operations of OFV-1 and/or second valve OFV-2 by controller C1 and/or controller C2. Manual system 142 may be configured to be operable by an operator of vehicle 102 (e.g., a pilot). Hence, system 100 is configured such that the operator (e.g., the pilot) may exercise manual control of first valve OFV-1 and second valve OFV-2 in a manner substantially overriding control by controller C1 and/or controller C2.

System 100 includes a first valve control system VS-1 ("system VS-1") including first valve OFV-1 (e.g., an outflow valve). First valve OFV-1 is configured to receive a fluid flow (e.g., an airflow) from compartments 112 and discharge the fluid flow to external environment EO. For example, first valve OFV-1 may be configured to receive the fluid flow from compartments 112 via one or more conduits of vehicle 102 such as conduit 122 and discharge the fluid flow to external environment EO. First valve OFV-1 may be configured to control a rate of the fluid flow (e.g., from conduit 122) discharged to external environment EO based on a position of first valve OFV-1.

System 100 includes a second valve control system VS-2 ("system VS-2") including second valve OFV-2 (e.g., an outflow valve). Second valve OFV-2 is configured to receive a fluid flow (e.g., an airflow) from compartments 112 and discharge the fluid flow to external environment EO. For example, second valve OFV-2 may be configured to receive the fluid flow from compartments 112 via one or more conduits of vehicle 102 such as conduit 150 and discharge the fluid flow to external environment EO. Second valve OFV-2 may be configured to control a rate of the fluid flow (e.g., from conduit 150) discharged to external environment EO based on a position of second valve OFV-2.

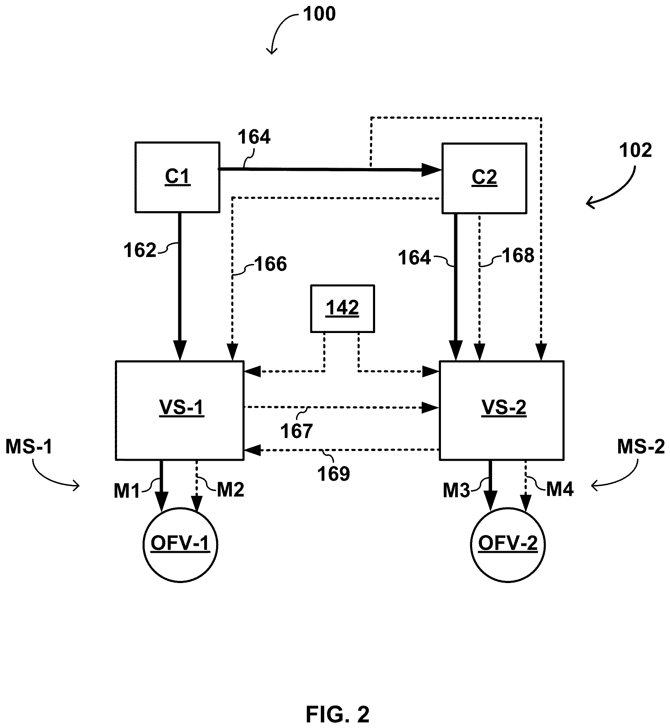

As an example, FIG. 2 depicts a schematic diagram of system 100 including controller C1, controller C2, system VS-1, first valve OFV-1, system VS-2, and second valve OFV-2. System VS-1 is configured to receive at least a first motor command 162 ("first command 162") and a second motor command 166 ("second command 166"). System VS-2 is configured to receive at least a third motor command 164 ("third command 164") and a fourth motor command 168 ("fourth command 168"). In examples, controller C1 is configured to issue first command 162 and third command 164. Controller C2 may be configured to issue second command 164 and fourth command 168.

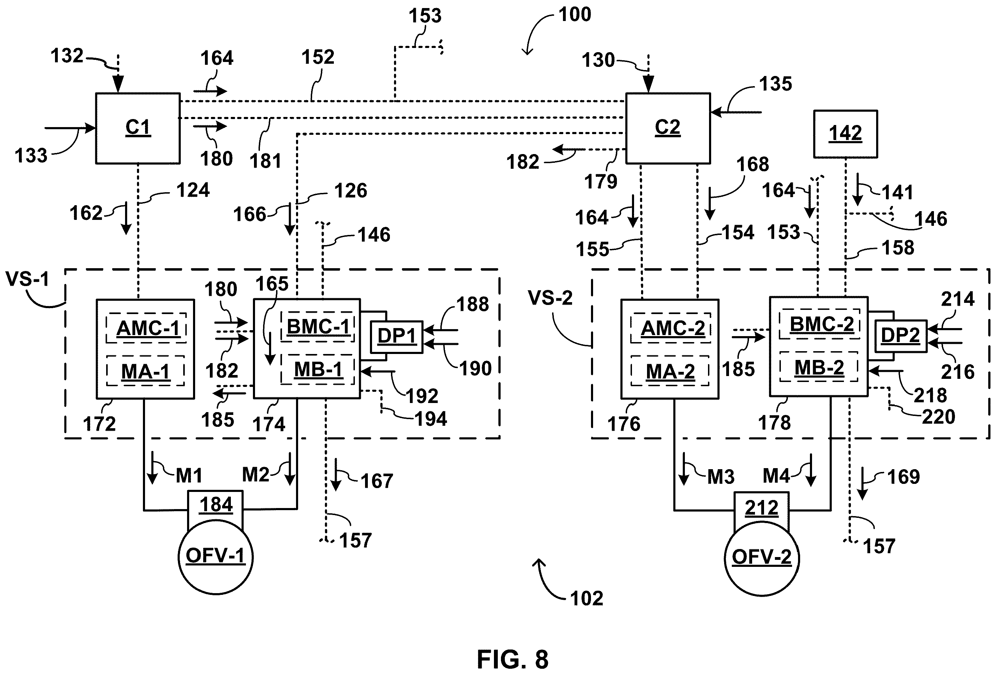

System VS-1 is configured to generate a mechanical power MS-1 to cause operation of first valve OFV-1 when system VS-1 receives first command 162 and/or second command 166. Mechanical power MS-1 may be at least one of a first mechanical power M1 or a second mechanical power M2. In examples, system VS-1 is configured to provide first mechanical power M1 using a first auto motor (e.g., MA-1 (FIG. 8)). System VS-1 may be configured to provide second mechanical power M2 using a first backup motor (e.g., MB-1 (FIG. 8)).

System VS-2 is configured to generate a mechanical power MS-2 to cause operation of second valve OFV-2 when system VS-2 receives third command 164 and/or fourth command 168. Mechanical power MS-2 may be at least one of a third mechanical power M3 or a fourth mechanical power M4. In examples, system VS-2 is configured to provide third mechanical power M3 using a second auto motor (e.g., MA-2 (FIG. 8)). System VS-2 may be configured to provide fourth mechanical power M4 using a second backup motor (e.g., MB-2 (FIG. 8)).

FIG. 2 schematically depicts system 100 operating in a first mode wherein controller C1 controls the operation of first valve OFV-1 and second valve OFV-2. In the first mode, in examples, system VS-1 receives first command 162 issued from controller C1 and system VS-2 receives third command 166 issued from controller C1. In examples, as depicted in FIG. 2, and in the first mode, system VS-2 receives third command 164 via controller C2, such that (e.g., at least with respect to third command 166) controller C1 substantially acts as a master controller as controller C2 acts as a worker controller.

In the first mode, system VS-1 is configured to provide mechanical power MS-1 to cause the operation of first valve OFV-1 in response to receiving first command 162 from controller C1. System VS-1 may also receive second command 166 from controller C2 when system 100 operates in the first mode, however system VS-1 may be configured to preferentially utilize first command 162 over second command 166 for the operation of first valve OFV-1 when system 100 operates in the first mode. In examples, in the first mode, system VS-1 provides first mechanical power M1 in response to first command 162.

Further, in the first mode, system VS-2 is configured to provide mechanical power MS-2 to cause the operation of second valve OFV-2 in response to receiving third command 164 issued by controller C1 and received from controller C2. System VS-2 may also receive fourth command 168 from controller C2 when system 100 operates in the first mode, however system VS-2 may be configured to preferentially utilize third command 164 over fourth command 168 for the operation of second valve OFV-2 when system 100 operates in the first mode. In examples, in the first mode, system VS-2 provides third mechanical power M3 in response to third command 164.

FIG. 2 schematically illustrates a command flow path of the first mode using solid lines to represent commands causing system VS-1 to operate first valve OFV-1 (e.g., first command 164) and causing system VS-2 to operate second valve OFV-2 (e.g., third command 166). Other commands (e.g., second command 166, fourth command 168, and/or other commands) which may be received by system VS-1 and/or system VS-2 but not acted upon to cause operation of first valve OFV-1 and/or second valve OFV-2 are represented with dashed lines. Hence, in the first mode, system 100 may be configured such that controller C1 controls the operation of first valve OFV-1 and second valve OFV-2.

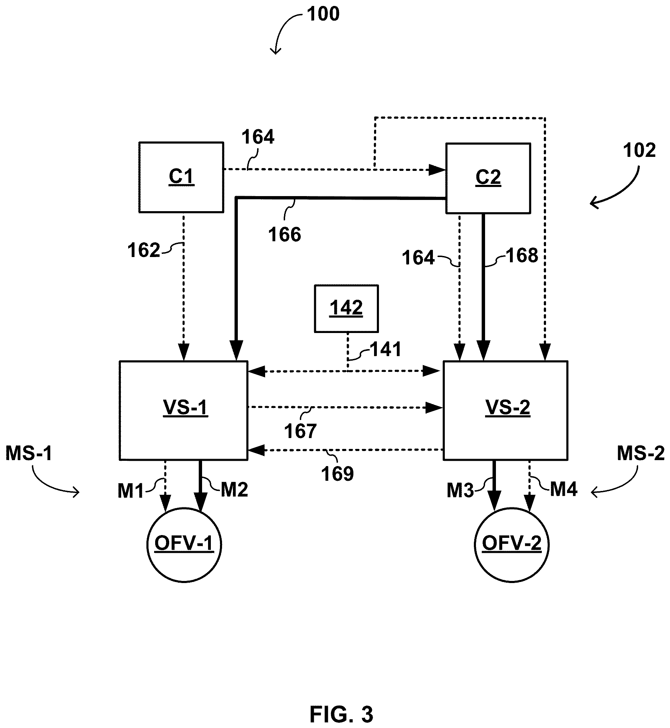

FIG. 3 schematically depicts system 100 operating in a second mode wherein controller C2 controls the operation of first valve OFV-1 and second valve OFV-2. FIG. 3 schematically illustrates a command flow path of the second mode using solid lines to represent commands causing system VS-1 to operate first valve OFV-1 (e.g., second command 166) and causing system VS-2 to operate second valve OFV-2 (e.g., fourth command 168). Other commands which may be received by system VS-1 and/or system VS-2 but not acted upon to cause operation of first valve OFV-1 and/or second valve OFV-2 are represented with dashed lines.

System 100 may be configured to transition from the first mode to the second mode when system 100 is operating in the first mode and controller C1 experiences a fault condition (e.g., when controller C1 issues a first fault signal 180 (FIG. 8)). In the second mode, system VS-1 is configured to provide mechanical power MS-1 to cause the operation of first valve OFV-1 in response to receiving second command 166 from controller C2. System VS-1 may also receive first command 162 from controller C1 when system 100 operates in the second mode (or not, if controller C1 is faulted), however system VS-1 may be configured to preferentially utilize second command 166 over first command 162 for the operation of first valve OFV-1 when system 100 operates in the first second. In examples, in the second mode, system VS-1 provides second mechanical power M2 in response to second command 166.

Further, in the second mode, system VS-2 is configured to provide mechanical power MS-2 to cause the operation of second valve OFV-2 in response to receiving fourth command 168 issued by controller C2. System VS-2 may also receive third command 164 from controller C1 (or not, if controller C1 is faulted) when system 100 operates in the second mode, however system VS-2 may be configured to preferentially utilize fourth command 168 over third command 164 for the operation of second valve OFV-2 when system 100 operates in the second mode. In examples, in the second mode, system VS-2 provides second mechanical power M2 in response to fourth command 168.

Hence, in the second mode, system 100 may be configured such that controller C2 controls the operation of first valve OFV-1 and second valve OFV-2. System 100 may be configured to transition from the first mode (e.g., of FIG. 2) to the second mode in response to a faulted condition of controller C1. Thus, system 100 is configured to transition from control of first valve OFV-1 and second valve OFV-2 by controller C1 to control of first valve OFV-1 and second valve OFV-2 by controller C2 in the event of a faulted condition or other operational loss of controller C1.

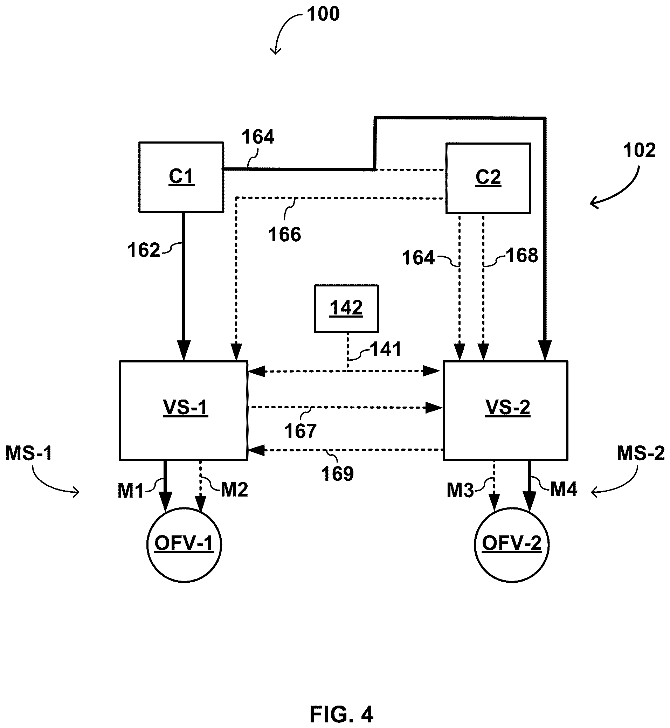

FIG. 4 schematically depicts system 100 operating in a third mode wherein controller C1 controls the operation of first valve OFV-1 and second valve OFV-2 in a manner which substantially bypasses controller C2. System 100 may be configured to transition from the first mode to the third mode when system 100 is operating in the first mode and controller C2 experiences a fault condition (e.g., when controller C2 issues a second fault signal 182 (FIG. 8)). FIG. 4 schematically illustrates a command flow path of the third mode using solid lines to represent commands causing system VS-1 to operate first valve OFV-1 (e.g., first command 162) and causing system VS-2 to operate second valve OFV-2 (e.g., third command 164). Other commands which may be received by system VS-1 and/or system VS-2 but not acted upon to cause operation of first valve OFV-1 and/or second valve OFV-2 are represented with dashed lines.

In the third mode, system VS-1 may provide mechanical power MS-1 in response to receiving first command 162 from controller C1 and system VS-2 may provide mechanical power MS-2 in response to receiving third command 164 from controller C2, however system 100 may be configured to provide third command 164 to system VS-2 in a manner which substantially bypasses controller C2 (e.g., due to a faulted condition of controller C2). System VS-1 may also receive second command 166 and/or system VS-2 may also receive fourth command 168 when system 100 operates in the third mode (or not, if controller C2 is faulted). However, system VS-1 may be configured to preferentially utilize first command 162 over second command 166 for the operation of first valve OFV-1 when system 100 operates in the third mode, and/or system VS-2 may be configured to preferentially utilize third command 164 over fourth command 168 for the operation of second valve OFV-2 when system 100 operates in the third mode.

In examples, in the third mode, system VS-1 provides first mechanical power M1 in response to first command 162. System VS-2, when system 100 operates in the third mode, may be configured to provide fourth mechanical power M4 in response to third command 162 (e.g., system VS-2 may provide third mechanical power M3 in response to third command 164 in the first mode but provide fourth mechanical power M4 in response to third command 164 in the third mode).

Hence, in the third mode, system 100 may be configured such that controller C1 controls the operation of first valve OFV-1 and second valve OFV-2. System 100 may be configured to transition from the first mode (e.g., of FIG. 2, with controller C2 as a worker controller relaying third command 164) to the third mode in response to a faulted condition of controller C2. Thus, system 100 is configured to substantially maintain control of first valve OFV-1 and second valve OFV-2 by controller C1 when system 100 operates in the first mode and experiences a faulted condition or other operational loss of controller C2.

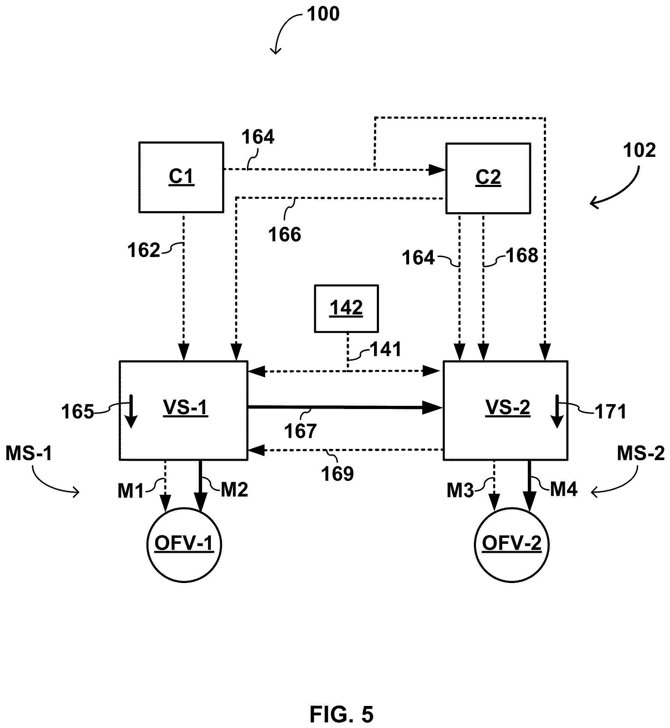

FIG. 5 schematically depicts system 100 operating in a first backup mode wherein system VS-1 (e.g., BMC-1 (FIG. 8)) controls the operation of first valve OFV-1 and second valve OFV-2. System 100 may be configured to transition from the second mode (e.g., FIG. 3) to the first backup mode or from the third mode (e.g., FIG. 4) to the first backup mode in response to a faulted condition or other operational loss of controller C1 and/or controller C2. FIG. 5 schematically illustrates a command flow path of the first backup mode using solid lines to represent commands causing system VS-1 to operate first valve OFV-1 (e.g., a backup command 167) and causing system VS-2 to operate second valve OFV-2 (e.g., a backup command 167). Other commands which may be received by system VS-1 and/or system VS-2 but not acted upon to cause operation of first valve OFV-1 and/or second valve OFV-2 are represented with dashed lines.

In the first backup mode, system VS-1 (e.g., BMC-1 (FIG. 8)) is configured to generate (e.g., to formulate) a backup command 165 to cause generation (e.g., by motor MB-1 (FIG. 8)) of mechanical power MS-1. In examples, in the first backup mode, system VS-1 provides second mechanical power M2 in response to generating backup command 165. Further, in the first backup mode, system VS-1 (e.g., BMC-1 (FIG. 8)) is configured to generate (e.g., to formulate) a backup command 167 to cause the operation of second valve OFV-2 by system VS-2. System VS-1 may be configured to communicate backup command 167 to system VS-2 in the first backup mode. In examples, system VS-2 is configured to provide fourth mechanical power M4 in response to backup command 167.

In examples, system VS-1 is configured to generate backup command 165 and backup command 167 when controller C1 and/or controller C2 are in a faulted condition. For example, when system 100 is operating in the second mode (e.g., of FIG. 3), system VS-1 may be configured to generate backup command 165 and backup command 167 in response to a faulted condition of controller C2 (e.g., in response to second fault signal 182 (FIG. 8)). When system 100 is operating in the third mode (e.g., of FIG. 4), system VS-1 may be configured to generate backup command 165 and backup command 167 in response to a faulted condition of controller C1 (e.g., in response to first fault signal 180 (FIG. 8)).

In the first backup mode, system VS-1 may also receive first command 162 and system VS-2 may also receive third command 164 (or not, if controller C1 is faulted), and/or system VS-1 may also receive second command 166 and system VS-2 may also receive fourth command 168 (or not, if controller C2 is faulted). However, system VS-1 may be configured to preferentially utilize backup command 165 over first command 162 and/or second command 166 when system 100 operates in the first backup mode. System VS-2 may be configured to preferentially utilize backup command 167 over third command 164 and/or fourth command 168 when system 100 operates in the first backup mode.

Hence, in the first backup mode, system 100 may be configured such that system VS-1 controls the operation of first valve OFV-1 and second valve OFV-2. Thus, system 100 is configured to transition from control of first valve OFV-1 and second valve OFV-2 by controller C1 or controller C2 to control of first valve OFV-1 and second valve OFV-2 by system VS-1 in the event of a faulted condition or other operational loss of controller C1 and/or controller C2.

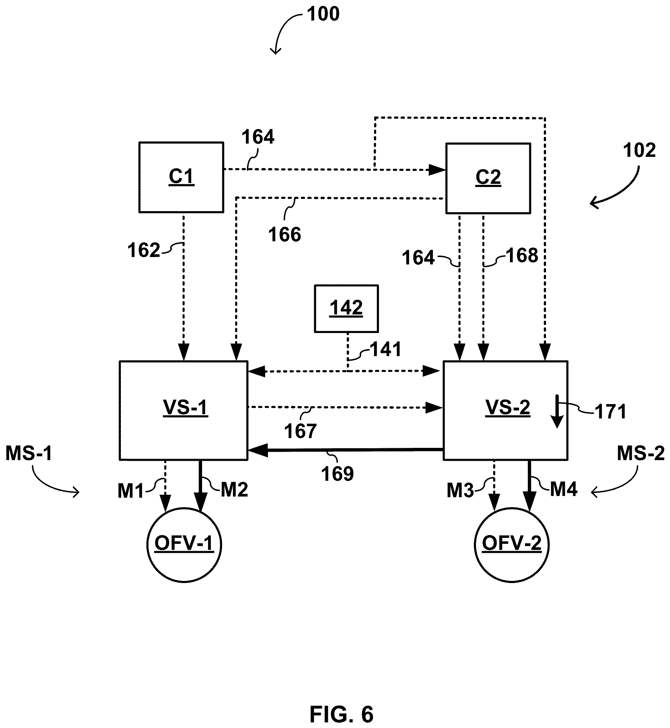

FIG. 6 schematically depicts system 100 operating in a second backup mode wherein system VS-2 (e.g., BMC-2 (FIG. 8)) controls the operation of first valve OFV-1 and second valve OFV-2. System 100 may be configured to transition from the first backup mode (e.g., FIG. 5) to the second backup mode in response to a faulted condition or other operational loss of portions of system VS-1 (e.g., BMC-1 (FIG. 8)). FIG. 6 schematically illustrates a command flow path of the second backup mode using solid lines to represent commands causing system VS-1 to operate first valve OFV-1 (e.g., a backup command 169) and causing system VS-2 to operate second valve OFV-2 (e.g., a backup command 171). Other commands which may be received by system VS-1 and/or system VS-2 but not acted upon to cause operation of first valve OFV-1 and/or second valve OFV-2 are represented with dashed lines.

In the second backup mode, system VS-2 (e.g., BMC-2 (FIG. 8)) is configured to generate (e.g., to formulate) backup command 171 to cause generation (e.g., by motor MB-2 (FIG. 8)) of mechanical power MS-2. In examples, in the second backup mode, system VS-2 provides fourth mechanical power M4 in response to generating backup command 171. Further, in the second backup mode, system VS-2 (e.g., BMC-2 (FIG. 8)) is configured to generate (e.g., to formulate) backup command 169 to cause the operation of first valve OFV-1 by system VS-1. System VS-2 may be configured to communicate backup command 169 to system VS-1 in the second backup mode. In examples, system VS-1 is configured to provide second mechanical power M2 in response to backup command 169.

In examples, system VS-2 is configured to generate backup command 171 and backup command 169 when the portion of system VS-1 is in the faulted condition. In the second backup mode, system VS-1 may also receive first command 162 and system VS-2 may also receive third command 164 (or not, if controller C1 is faulted), and/or system VS-1 may also receive second command 166 and system VS-2 may also receive fourth command 168 (or not, if controller C2 is faulted). However, system VS-1 may be configured to preferentially utilize backup command 169 over first command 162, second command 166, and/or backup command 165 when system 100 operates in the second backup mode. System VS-2 may be configured to preferentially utilize backup command 171 over third command 164, fourth command 168, and/or backup command 167 when system 100 operates in the first backup mode.

Hence, in the second backup mode, system 100 may be configured such that system VS-2 controls the operation of first valve OFV-1 and second valve OFV-2. Thus, system 100 is configured to transition from control of first valve OFV-1 and second valve OFV-2 by system VS-1 to control of first valve OFV-1 and second valve OFV-2 by system VS-2 in the event of a faulted condition or other operational loss of controller C1, controller C2, and/or portions of system VS-1.

Thus, system 100 may be configured to substantially transfer control of OFV-1 and OFV-2 in the event of operational losses to system 100. System 100 may be configured to transition from the first mode (e.g., FIG. 2) to the second mode (e.g., FIG. 3) on an operational loss of controller C1. System 100 may be configured to transition from the first mode (e.g., FIG. 2) to the third mode (e.g., FIG. 4) on an operational loss of controller C2. System 100 may be configured to transition from the second mode (e.g., FIG. 2) or the third mode (e.g., FIG. 4) to the first backup mode (e.g. FIG. 5) on an operational loss of controller C2 and/or controller C1. System 100 may be configured to transition from the first backup mode (e.g., FIG. 5) to the second backup mode (e.g. FIG. 6) on an operational loss of at least some portion of system VS-1.

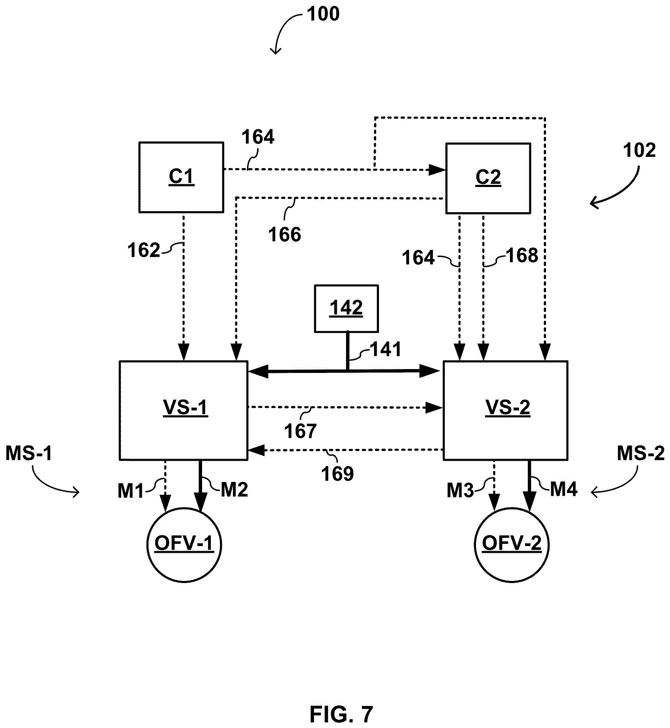

In examples, system 100 is configured to transition from the first mode, the second mode, the third mode, the first backup mode, and/or the second backup mode to the manual mode using a manual system 142. For example, FIG. 7 schematically depicts system 100 operating in a manual mode wherein manual system 142 controls the operation of first valve OFV-1 and/or second valve OFV-2. FIG. 6 schematically illustrates a command flow path of the manual mode using solid lines to represent commands (e.g., one or more manual commands 141) causing system VS-1 to operate first valve OFV-1 and causing system VS-2 to operate second valve OFV-2. Other commands which may be received by system VS-1 and/or system VS-2 but not acted upon to cause operation of first valve OFV-1 and/or second valve OFV-2 are represented with dashed lines.

In the manual mode, system VS-1 may also receive first command 162, second command 166, and/or backup command 169, however system VS-1 may be configured to preferentially utilize manual commands 141 over first command 162, second command 166, and/or backup command 169 when system 100 operates in the manual mode. In the manual mode, system VS-2 may also receive third command 164, fourth command 168, and/or backup command 167, however system VS-2 may be configured to preferentially utilize manual commands 141 over third command 164, fourth command 168, and/or backup command 167 when system 100 operates in the manual mode. System 100 may be configured such that an operator of vehicle 102 (e.g., a pilot) may cause system 100 to transition to the manual mode. Hence, system 100 configured such that the operator may substantially override control of OFV-1 and/or OFV-2 by controller C1, controller C2, system VS-1, and/or system VS-2 using manual system 142.

Returning to FIG. 1, an outflow valve (e.g., at least one of first valve OFV-1 or second valve OFV-2) may be configured to establish a closed position wherein the outflow valve substantially fluidically isolates conduit 122 or conduit 150 and external environment EO, a fully open position wherein the outflow valve defines a fully open flow area through which the fluid flow may discharge to external environment EO, and a plurality of intermediate open positions wherein, at each intermediate open position, the outflow valve defines an intermediate flow area less than the fully open flow area. The outflow valve may be configured to (e.g., for a given pressure of internal environment EI and a given pressure of external environment EO) increase the rate of the fluid flow discharged to external environment EO when the outflow valve moves from a first intermediate open position defining a first intermediate flow area to a second intermediate open position defining a second intermediate flow area greater than the first intermediate flow area (e.g., when the outflow valve moves in an opening direction). The outflow valve may be configured to (e.g., for the given pressure of internal environment EI and the given pressure of external environment EO) decrease the rate of the fluid flow discharged to external environment EO when the outflow valve moves from the second intermediate open position to the first intermediate open position (e.g., when the outflow valve moves in a closing direction).

System VS-1 is configured to cause operation of first valve OFV-1 (e.g., to cause first valve OFV-1 to establish the open position, establish an intermediate open position, establish the closed position, move in the opening direction, and/or move in the closing direction). Controller C1 and/or controller C2 are configured to control a pressure of pressure of compartments 112 (e.g., a pressure of internal environment EI) by commanding system VS-1 to cause the operation of first valve OFV-1. Controller C1 and/or controller C2 may be configured to command system VS-1 to position and/or modulate first valve OFV-1 to discharge the fluid flow from compartments 112 to control the pressure of compartments 112 as ECS 118 provides the fluid flow to compartments 112. For example, controller C1 may be configured to command system VS-1 to cause the operation of first valve OFV-1 using a communication link 124. Controller C2 may be configured to command system VS-1 to cause the operation of first valve OFV-1 using a communication link 126.

System VS-2 is configured to cause operation of second valve OFV-2 (e.g., to cause second valve OFV-2 to establish the open position, establish an intermediate open position, establish the closed position, move in the opening direction, and/or move in the closing direction). Controller C1 and/or controller C2 are configured to control a pressure of pressure of compartments 112 (e.g., a pressure of internal environment EI) by commanding system VS-2 to cause the operation of second valve OFV-2. Controller C1 and/or controller C2 may be configured to command system VS-2 to position and/or modulate second valve OFV-2 to discharge the fluid flow from compartments 112 to control the pressure of compartments 112 as ECS 118 provides the fluid flow to compartments 112.

For example, controller C1 may be configured to command system VS-2 to cause the operation of second valve OFV-2 using a communication link 152 (e.g., when system 100 operates in the first mode) or using a communication link 153 (e.g., when system 100 operates in the third mode). Controller C2 may be configured to command system VS-2 to cause the operation of second valve OFV-2 using a communication link 154. In some examples (e.g., when controller C1 uses controller C2 to relay a motor command to system VS-2), controller C2 is configured to receive the motor command from controller C1 via communication link 152 and provide the motor command to system VS-2 via a communication link 155. Hence, as least with regard to a third motor command provided by controller C1, controller C1 may be configured to function as a master controller and controller C2 may be configured to function as a worker controller.

System VS-1 may be configured to cause the operation of second valve OFV-2 using backup motor command 167 (FIG. 5) via a communication link 157. System VS-2 may be configured to cause the operation of first valve OFV-1 using backup motor command 169 (FIG. 6) via communication link 157.

In examples, manual system 142 includes circuitry 144 (e.g., processing circuitry and/or operating circuitry) configured to issue the manual command to system VS-1 (e.g., via a communication link 146) and system VS-2 (e.g., via a communication link 158). Manual system 142 may include an actuator 148 (e.g., in flight deck 116) configured to cause circuitry 144 to issue the manual command. Actuator 148 may be configured to be operable by an operator of vehicle 102 (e.g., a pilot). In examples, actuator 148 is a switch, button, touchscreen, or the like.

In some examples, controller C1 and/or controller C2 may be configured to receive external pressure data or differential pressure data. The external pressure data may be indicative of a pressure of external environment EO. The differential pressure data may be indicative of a differential pressure between the pressure of internal environment EI and the pressure of external environment EO. In examples, system 100 is be configured such that an air data system 128 ("ADS 128) provides the external pressure data and/or the differential pressure data (e.g., via a communication channel 130 and/or a communication channel 132). Controller C1 and/or controller C2 may be configured to determine the differential pressure data using the pressure signal from cabin sensor 134 and the external pressure data. In examples, ADS 128 is a primary air data system of an aircraft or a secondary air data system of the aircraft. ADS 128 may include processing circuitry and/or control circuitry supported by vehicle 102 (e.g., vehicle body 103) and configured to determine the differential pressure data.

ADS 128 may be configured to detect and/or determine the pressure of external environment EO in any manner. For example, ADS 128 may be configured to detect and/or determine a pressure of external environment EO based on an altitude of vehicle 102, a flight posture of vehicle 102, a climb and/or rate of climb of vehicle 102, a descent and/or rate of descent of vehicle 102, whether vehicle 102 is in flight or on the ground, an ambient pressure of external environment EO and/or expected changes to the ambient pressure of external environment EO, an airspeed of vehicle 102, an angle-of-attack of vehicle 102 relative to external environment EO, and/or other parameters descriptive of a flight posture of vehicle 102. In some examples, ADS 128 is configured to determine the pressure of external environment EO using a sensor 140 configured to sense a pressure of external environment EO.

A valve control system (e.g., one of system VS-1 or system VS-1) may be further configured to cause operation of an outflow valve (e.g., first valve OFV-1 or second valve OFV-2) based on a differential pressure between internal environment E1 and external environment EO. The valve control system may be configured to substantially disregard commands from controller C1 and/or controller C2 when the differential pressure is greater than or equal to a threshold. In examples, system VS-1 includes a sensor DP1 configured to sense a differential pressure between internal environment E1 and external environment EO. System VS-1 may be configured to substantially disable and/or override commands from both of controller C1 and controller C2 and cause the operation of first valve OFV-1 when the sensed differential pressure of sensor DP1 is greater than or equal to the threshold. System VS-2 may include a sensor DP2 configured to sense a differential pressure between internal environment E1 and external environment EO. System VS-2 may be configured to substantially disable and/or override commands from both of controller C1 and controller C2 and cause the operation of second valve OFV-2 when the sensed differential pressure of sensor DP2 is greater than or equal to the threshold.

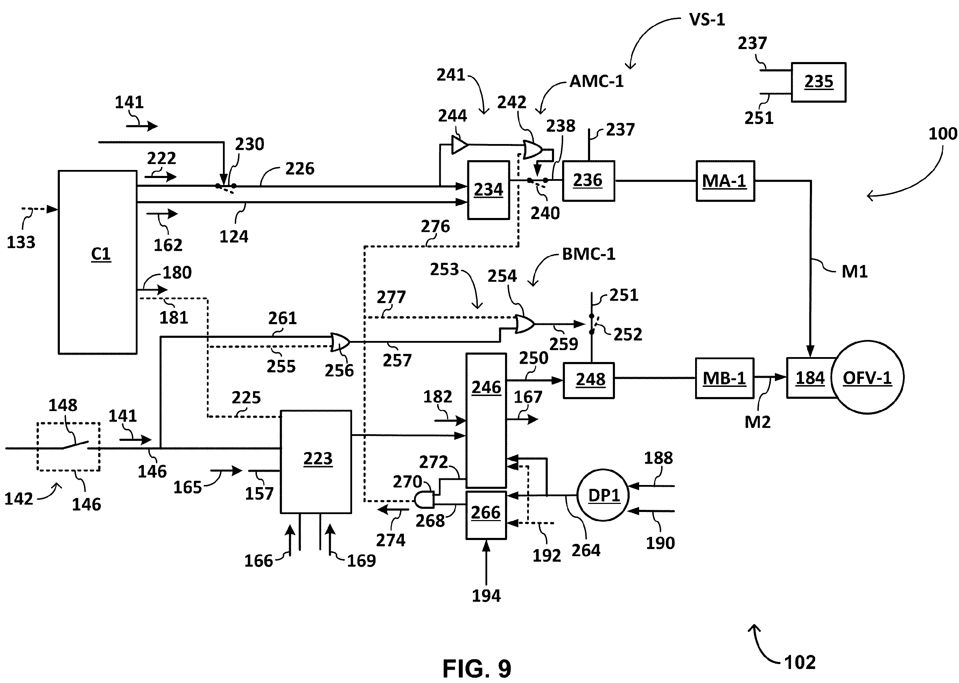

In examples, the valve control system (e.g., the one of system VS-1 or system VS-1) includes a primary microprocessor (e.g., MCU 246 (FIG. 9)) and a sensor MCU (e.g., sensor MCU 266 (FIG. 9)) configured to receive the sensed differential pressure from a DP sensor (e.g., one of sensor DP1 or sensor DP2). System 100 may be configured such that the valve control system VS-1 may only override commands from controller C1 and controller C2 when both the main MCU and the sensor MCU agree the sensed differential pressure of the DP sensor is greater than or equal to the threshold. In some examples, the main MCU and the sensor MCU are configured to ascertain a determined differential pressure between internal environment E1 and external environment EO (e.g., using cabin sensor 134 and the external pressure data indicative of external environment EO). The valve control system (e.g., the main MCU and/or the sensor MCU) may be configured to compare the determined differential pressure and the sensed differential pressure of the DP sensor to provide a check on the operation of the DP sensor.

FIG. 8 illustrates a schematic block diagram of system 100 including controller C1 and controller C2 configured to control first valve OFV-1 and second valve OFV-2. System VS-1 is configured to cause the operation of first valve OFV-1. System VS-2 is configured to cause the operation of second valve OFV-2. System 100 is configured such that system VS-1 causes operation of first valve OFV-1 based on a command from one of controller C1 or controller C2 and such that system VS-2 causes operation of second valve OFV-2 based on a command from the one of controller C1 or controller C2. Stated similarly, system 100 is configured such that a single controller (e.g., one of controller C1 or controller C2) causes system VS-1 to cause operation of first valve OFV-1 and causes system VS-2 to cause operation of second valve OFV-2.

System VS-1 includes an first auto motor assembly 172 and a first backup motor assembly 174. First auto motor assembly 172 includes a first auto motor controller AMC-1 ("auto controller AMC-1) and a first auto motor MA-1 ("auto motor MA-1"). Auto controller AMC-1 is configured to cause auto motor MA-1 to generate first mechanical power M1 and cause the operation of first valve OFV-1 when auto controller AMC-1 receives first command 162. In examples, auto motor MA-1 is configured to transfer first mechanical power M1 to a gearbox 184. Gearbox 184 may be configured to receive first mechanical power M1 from auto motor MA-1 and transfer first mechanical power M1 to first valve OFV-1 to cause operation of first valve OFV-1. Hence, system VS-1 is configured to cause operation of first valve OFV-1 in response to first command 162.

First backup motor assembly 174 includes a first backup motor controller BMC-1 ("backup controller BMC-1") and a first backup motor MB-1 ("backup motor MB-1"). Backup controller BMC-1 is configured to cause backup motor MB-1 to generate second mechanical power M2 and cause the operation of first valve OFV-1 when backup controller BMC-1 receives second command 166. In examples, backup motor MB-1 is configured to transfer second mechanical power M2 to gearbox 184. Gearbox 184 may be configured to receive second mechanical power M2 from backup motor MB-1 and transfer second mechanical power M2 to first valve OFV-1 to cause operation of first valve OFV-1. In some examples, backup motor MB-1 is further configured to generate second mechanical power M2 when first backup motor assembly 174 (e.g., backup controller BMC-1) issues a backup command 165 to backup motor MB-1. Hence, system VS-1 is configured to cause operation of first valve OFV-1 in response to second command 166 or backup command 165.

System VS-1 is configured to operate first valve OFV-1 using only one of first command 162, second command 166, or backup command 165. For example, system VS-1 may be configured to operate first valve OFV-1 by one of causing auto controller AMC-1 to provide first command 162 to auto motor MA-1, causing backup controller BMC-1 to provide second command 166 to backup motor MB-1, or causing backup controller BMC-1 to provide backup command 165 to backup motor MB-1. In examples (e.g., when system 100 operates in the first mode), system VS-1 is configured to preferentially provide first command 162 to auto motor MA-1 over providing second command 166 to backup motor MB-1 and over providing backup command 165 to backup motor MB-1. System VS-1 (e.g., when system 100 operates in the second mode) may be configured to preferentially provide second command 166 to backup motor MB-1 over providing backup command 165 to backup motor MB-1.

For example, system VS-1 may be configured to provide second command 166 to backup motor MB-1 only when first command 162 is unavailable or unable to be provided to auto motor MA-1. System VS-1 may be configured to provide backup command 165 to backup motor MB-1 only when second command 166 is unavailable or unable to be provided to backup motor MB-1. Thus, system VS-1 may be configured to preferentially use first command 162 over second command 166 and backup command 165 for the operation of first valve OFV-1, and preferentially use second command 166 over backup command 165 for the operation of first valve OFV-1.

System VS-2 includes a second auto motor assembly 176 and a second backup motor assembly 178. Second auto motor assembly 176 includes a second auto motor controller AMC-2 ("auto controller AMC-2) and a second auto motor MA-2 ("auto motor MA-2"). Auto controller AMC-2 is configured to cause auto motor MA-2 to generate third mechanical power M3 and cause the operation of second valve OFV-2 when auto controller AMC-2 receives third command 164. Further, Auto controller AMC-2 is configured to cause auto motor MA-2 to generate third mechanical power M3 and cause the operation of second valve OFV-2 when auto controller AMC-2 receives fourth command 168. In examples, auto motor MA-2 is configured to transfer third mechanical power M3 to a gearbox 212. Gearbox 212 may be configured to receive third mechanical power M3 from auto motor MA-2 and transfer third mechanical power M3 to second valve OFV-2 to cause operation of second valve OFV-2. Hence, system VS-2 is configured to cause operation of second valve OFV-2 in response to third command 164 and fourth command 168.

Second backup motor assembly 178 includes a second backup motor controller BMC-2 ("backup controller BMC-2") and a second backup motor MB-2 ("backup motor MB-2"). Backup controller BMC-2 is configured to cause backup motor MB-2 to generate fourth mechanical power M4 and cause the operation of second valve OFV-2 when backup controller BMC-2 receives backup command 167 (e.g., via communication link 157 or another communication link). In examples, backup controller BMC-2 is configured to receive backup command 167 from backup controller BMC-1. Backup motor MB-2 may be configured to transfer fourth mechanical power M4 to gearbox 212. Gearbox 212 may be configured to receive fourth mechanical power M4 from backup motor MB-2 and transfer fourth mechanical power M4 to second valve OFV-2 to cause operation of second valve OFV-2.

Further, second backup motor assembly 178 is configured to cause backup motor MB-2 to generate fourth mechanical power M4 and cause the operation of second valve OFV-2 when backup controller BMC-2 receives third command 164 (e.g., via communication link 153). For example, second backup motor assembly 178 may be configured to cause backup motor MB-2 to generate fourth mechanical power M4 in response to receiving third command 164 when third command 164 (e.g., as relayed by controller C2) is unavailable to or ineffective to cause auto motor MA-2 to generate fourth mechanical power M4 (e.g., due to a fault of controller C2).

System VS-2 is configured to operate second valve OFV-2 using only one of third command 164, fourth command 168, or backup command 167. For example, system VS-2 may be configured to operate second valve OFV-2 by one of causing auto controller AMC-2 to provide third command 164 to auto motor MA-2, causing backup controller BMC-2 to provide third command 164 to backup motor MB-2, causing auto controller AMC-2 to provide fourth command 168 to auto motor MA-2, or causing backup controller BMC-2 to provide backup command 167 to backup motor MB-2.

In examples (e.g., when system 100 operates in the first mode), system VS-2 is configured to preferentially provide third command 164 to auto motor MA-2 over providing third command 164 to backup motor MB-2, over providing fourth command 168 to auto motor MA-2, and over providing backup command 167 to backup motor MB-2. System VS-1 (e.g., when system 100 operates in the third mode) may be configured to preferentially provide third command 164 to backup motor MB-2 over providing fourth command 168 to auto motor MA-2 and over providing backup command 167 to backup motor MB-2. System VS-2 (e.g., when system 100 operates in the second mode) may be configured to preferentially provide fourth command 168 to auto motor MA-2 over providing backup command 167 to backup motor MB-2.

For example, system VS-2 may be configured to provide third command 164 to backup motor MB-2 only when third command 164 is unavailable to or ineffective at causing operation of auto motor MA-2. System VS-2 may be configured to provide fourth command 168 to auto motor MA-2 only when third command 164 is unavailable or unable to be provided to auto motor MA-2 or backup motor MB-2. System VS-2 may be configured to provide backup command 167 to backup motor MB-2 only when fourth command 168 is unavailable or unable to be provided to auto motor MA-1. Thus, system VS-2 may be configured to preferentially use third command 164 over fourth command 168 and over backup command 167 for the operation of second valve OFV-1, and preferentially use fourth command 168 over backup command 167 for the operation of second valve OFV-2.

Hence, when system 100 operates in the first mode and the third mode, system VS-1 may be configured to use first command 162 for the operation of first valve OFV-1 and system VS-2 may be configured to use third command 164 for the operation of second valve OFV-2 (e.g., system VS-2 may use third command 164 via AMC-2 in the first mode and use third command 164 via BMC-2 in the third mode). When system 100 operates in the second mode, system VS-1 may be configured to use second command 166 for the operation of first valve OFV-1 and system VS-2 may be configured to use fourth command 168 for the operation of first valve OFV-1.

Controller C1 may be configured to issue first command 162 (e.g., via communication link 124) to system VS-1 and third command 164 (e.g., via communication link 152 and communication link 155, or via communication link 153) to system VS-2. Controller C2 may be configured to issue second command 166 (e.g., via communication link 126) to system VS-1 and issue fourth command 168 (e.g., via communication link 154) to system VS-2. As discussed, system VS-1 may be configured to preferentially utilize first command 162 over second command 166 for operation of first valve OFV-1 and system VS-2 may be configured to preferentially utilize third command 164 over fourth command 168 for operation of second valve OFV-2. Hence, system 100 is configured to operate in a first mode whereby system VS-1 and system VS-2 preferentially utilize motor commands originating with controller C1 over motor commands originating with controller C2, and such that controller C1 controls the operation of first valve OFV-1 and second valve OFV-2.

System 100 is configured to transition to the second mode whereby system VS-1 utilizes second command 166 for operation of first valve OFV-1 and system VS-2 utilizes fourth command 168 for operation of second valve OFV-2 when first command 162 and/or third command 164 from controller C1 are unavailable or otherwise ineffective. In examples, system 100 is configured to transition from the first mode to the second mode in response to a fault or other casualty of controller C1. For example, the controller C1 may be configured to issue a first fault signal 180 issued in response to a detected fault in controller C1. Controller C1 may be configured to issue first fault signal 180 in response to, for example, sensing an invalid power from a power supply to controller C1, a state (e.g., an overflow) of a watchdog timer of controller C1, an internal fault detected by a microprocessor of controller C1, and/or due to another detected fault impacting controller C1.

Controller C1 may communicate first fault signal 180 to controller C2 (e.g., via a communication link 181) to cause controller C2 to issue second command 166 and/or enable the provision of second command 166 from auto controller AMC-2 to auto motor MA-2. In examples, controller C1 provides first fault signal 180 to system VS-1 (e.g., backup controller BMC-1). System VS-1 may be configured to enable (e.g., via source select device 223 and/or logic device 256 (FIG. 9)) the provision of second command 166 from backup controller BMC-1 to backup motor MB-1 when system VS-1 receives the first fault signal 180, such that system VS-1 may utilize second command 166 for the operation of first valve OFV-1. Controller C1 may communicate first fault signal 180 to controller C2 (e.g., via a communication link 181) to cause controller C2 to issue second command 166 and/or enable the provision of second command 166 from auto controller AMC-2 to auto motor MA-2.

Hence, system 100 may be configured to operate in the first mode whereby controller C1 controls the operation of first valve OFV-1 and OFV-2. System 100 may be configured to transition to the second mode whereby controller C2 controls the operation of first valve OFV-1 and OFV-2 when controller C1 provides first fault signal 180.

Hence, system 100 may be configured to operate in the first mode whereby controller C1 controls the operation of first valve OFV-1 and OFV-2. System 100 may be configured to transition to the second mode whereby controller C2 controls the operation of first valve OFV-1 and OFV-2 when controller C1 provides first fault signal 180.

System 100 is configured to transition from the second mode to a first backup mode in response to a fault or other casualty of controller C2. Backup controller BMC-1 may be configured to issue backup motor commands to cause the operation of first valve OFV-1 and second valve OFV-2 in the first backup mode. For example, backup controller BMC-1 may be configured to cause the operation of first valve OFV-1 using backup command 165 to backup motor MB-1 and cause the operation of second valve OFV-2 using backup command 167 to backup motor MB-2 (e.g., communicated via communication link 157), such that system 100 maintains control of first valve OFV-1 and second valve OFV-2 in the event of an operational loss of controller C1 and controller C2.

In examples, system 100 is configured to transition from the second mode to the first backup mode in response to a fault or other casualty of controller C2. For example, controller C2 may be configured to issue a second fault signal 182 (e.g., via a communication link 179) in response to a detected fault in controller C2. Controller C2 may be configured to issue second fault signal 182 in response to, for example, sensing an invalid power from a power supply to controller C2, a state (e.g., an overflow) of a watchdog timer of controller C2, an internal fault detected by a microprocessor of controller C2, and/or due to another detected fault impacting controller C2. In examples, controller C2 provides second fault signal 182 to backup controller BMC-1 to cause backup controller BMC-1 to issue the backup commands. Controller C2 may communicate second fault signal 182 to backup controller BMC-2 (e.g., to source select device 223 (FIG. 9)) to enable control of backup controller BMC-2 using backup command 167.

As discussed, when system 100 is operating in the first mode such that system VS-1 uses first command 162 to operate first valve OFV-1 and system VS-2 uses third command 164 to operate second valve OFV-2, system 100 may be configured to transition from the first mode to the third mode in response to second fault signal 182. In the third mode, system VS-1 may continue to use first command 162 and system VS-2 may continue to use third command 164, however system 100 may be configured to deliver third command 164 to system VS-1 in a manner which substantially bypasses controller C2 (e.g., due to its faulted condition). For example, in the third mode, controller C2 may deliver third command 164 to system VS-2 via communication link 153 rather than via communication link 152 and communication link 155. Controller C2 may provide second fault signal 182 to system VS-2 to enable control of backup controller BMC-2 using third command 164.

System 100 may be configured to transition from the third mode to the first backup mode in response to a fault or other casualty of controller C1 (e.g., using backup command 165 to backup motor MB-1 and backup command 167 to backup motor MB-2). In examples, controller C1 provides first fault signal 180 to backup controller BMC-1, such that backup controller BMC-1 may receive both first fault signal 180 and second fault signal 182. BMC-1 may be configured to issue backup command 165 and backup command 167 when BMC-1 receives both first fault signal 180 and second fault signal 182, such that system 100 may transition from the third mode to the first backup mode.

Hence, when system 100 operates in the first mode, system 100 may transition from the first mode to the second mode in the event of an operational loss of controller C1 (e.g., as indicated by first fault signal 180). System 100 may transition from the first mode to the third mode in the event of an operational loss of controller C2 (e.g., as indicated by second fault signal 182). System 100 may transition from the second mode to the first backup mode and from the third mode to the first backup mode in the event of an operational loss of both controller C1 and controller C2.

In some examples, system 100 is configured to transition from the first backup mode to a second backup mode in response to a fault or other casualty of backup controller BMC-1. BMC-2 may be configured to cause the operation of second valve OFV-2 using backup motor MB-2 and cause the operation of first valve OFV-1 using backup command 169 (e.g., communicated to backup controller BMC-1 via communication link 157). In examples, system 100 is configured to transition from the first backup mode to the second backup mode in response to a third fault signal 185 issued by backup controller BMC-1 in response to a detected fault in backup controller BMC-1 (e.g., due to sensing an invalid power from a power supply to backup controller BMC-1, a state (e.g., an overflow) of a watchdog timer of backup controller BMC-1, an internal fault detected by a microprocessor of backup controller BMC-1, and/or due to another detected fault impacting backup controller BMC-1). In examples, backup controller BMC-1 provides third fault signal second to backup controller BMC-2 to cause backup controller BMC-2 to cause the operation of second valve OFV-2 using backup motor MB-2 and cause the operation of first valve OFV-1 using backup command 169.

System 100 may be configured to transition from the first mode, the second mode, the third mode, the first backup mode, and/or the second backup mode to the manual mode using manual system 142. In examples, manual system 142 is configured to provide manual commands 141 to backup controller BMC-1 (via communication link 146) and to backup controller BMC-2 (via communication link 158) to cause system 100 to transition to the manual mode. System 100 may be configured to enable control of backup controller BMC-1 and backup controller BMC-2 by manual system 142 using the one or more manual commands. In some examples, manual system 142 (e.g., circuitry 144 (FIG. 1)) may be configured to provide the one or more commands such that first valve OFV-1 and second valve OFV-2 operate in similar to substantially the same manner (e.g., such that first valve OFV-1 and second valve OFV-2 establish substantially the same position). In some examples, manual system 142 (e.g., circuitry 144 (FIG. 1)) may be configured to provide the one or more commands such that first valve OFV-1 operates in a different manner than second valve OFV-2 (e.g., such that first valve OFV-1 has a first position and second valve OFV-2 has a second position).

Controller C1 is configured to receive a pressure sense signal 133 indicative of a pressure of internal environment EI (e.g., sensed by cabin sensor 134). Controller C1 may be configured to cause the operation of first valve OFV-1 (e.g., by issuing first command 162) and second valve OFV-2 (e.g., by issuing third command 164) based on a comparison of pressure sense signal 133 with a pressure setpoint (e.g., a pressure setpoint corresponding to about corresponding to about 6000 to 8000 feet above sea level). Controller C2 is configured to receive a pressure sense signal 135 indicative of a pressure of internal environment EI (e.g., sensed by cabin sensor 134). Controller C2 may be configured to cause the operation of first valve OFV-1 (e.g., by issuing second command 166) and second valve OFV-2 (e.g., by fourth command 168) based on comparison of pressure sense signal 135 with the pressure setpoint or another pressure setpoint.

In examples, controller C1 may be a different type of controller from controller C2 to, for example, reduce the likelihood of a common failure for both controller C1 and controller C2, such as such as manufacturing process defect, an actual design defect, or from an external influence such as exposure to temperature, radiation, vibration, or power interrupts. For example, controller C1 may include one or more microprocessors having a different type from one or more microprocessors of controller C2. A type of microprocessor may refer to a manufacturer, a model number, a design, a manufacturing facility, a software compiler, an operating system, a pin count, a logic family (e.g., complementary metal-oxide-semiconductor (CMOS) or transistor-transistor logic (TTL)), and/or a register size (e.g., eight or sixteen bits) of a microprocessor. Additionally or alternatively, the operating system of the one or more microprocessors of controller C1 may be different than the operating system of the one or more microprocessors of controller C2. In some examples, controller C1 receives a different power supply than controller C2. For example, a power supply for controller C1 may be substantially independent of a power supply for controller C2 (e.g., for example, by using different power sources aboard vehicle 102 such as different batteries or generators, and/or by power supply from different vehicle supplied power buses).

System VS-1 (e.g., backup controller BMC-1) is configured to cause operation of first valve OFV-1 based on a first differential pressure between internal environment EI and external environment EO (FIG. 1). Sensor DP1 may be configured to determine the first differential pressure using a pressure sense signal 188 indicative of the pressure of internal environment EI and pressure sense signal 190 indicative of the pressure of external environment EO. In examples, system VS-1 is configured to cause operation of first valve OFV-1 using backup controller BMC-1 and backup motor MB-1 when sensor DP1 detects the first differential pressure exceeding the threshold.

For example, backup controller BMC-1 (e.g., MCU 246 and/or sensor MCU 266 (FIG. 9)) may be configured such that, when sensor DP1 detects the first differential pressure exceeding the threshold, backup controller BMC-1 causes the operation of backup motor MB-1 to cause operation of first valve OFV-1. System VS-1 may be configured to substantially prevent first auto motor assembly 172 from responding to first command 162 and substantially prevent first backup motor assembly 174 from responding to second command 166 when the first differential pressure is greater than or equal to the threshold. In examples, pressure sense signal 188 is indicative of a pressure sensed by a sensor other than sensor 134. Pressure sense signal 190 may be is indicative of a pressure sensed by a sensor other that utilized by ADS 128.

In examples, system VS-1 (e.g., the MB-1 controller) is configured to receive a pressure signal 192 indicative of the pressure of internal environment EI and a pressure signal 194 indicative of the pressure of external environment EO. In some examples, pressure signal 192 is indicative of a pressure sensed by a cabin sensor 137, which is a different sensor than cabin sensor 134. Pressure signal 194 may be provided by ADS 128. For example, pressure signal 194 may be indicative of a representative pressure determined based on an altitude of vehicle 102 determined by ADS 128. System VS-1 (e.g., the MB-1 controller) may be configured to determine a determined differential pressure using pressure signal 192 and pressure signal 194. In examples, system VS-1 (e.g., the MB-1 controller) may be configured to compare the determined differential pressure and the first differential pressure of sensor DP1 to provide a check on the operation of sensor DP1. System 100 (e.g., system YS-1, MB-1 controller) may be configured to provide an error signal and/or alarm if the first differential pressure and the determined differential pressure differs by more than an alert threshold.

In examples, system VS-2 (e.g., motor assembly MB-2) is configured to cause operation of first valve OFV-2 based on a second differential pressure sensed by a second sensor DP2. Sensor DP2 may be configured to determine the second differential pressure using a pressure sense signal 214 indicative of the pressure of internal environment EI and pressure sense signal 216 indicative of the pressure of external environment EO. In examples, system VS-2 is configured to cause operation of second valve OFV-2 using backup controller BMC-2 and backup motor MB-2 when sensor DP2 detects the second differential pressure exceeding the threshold.

For example, backup controller BMC-2 may be configured such that, when sensor DP2 detects the second differential pressure exceeding the threshold, backup controller BMC-2 causes the operation of backup motor MB-2 to cause operation of second valve OFV-2. System VS-2 may be configured to substantially disable and/or override third command 164 from controller C1 and fourth command 168 from controller C2 when the second differential pressure exceeds a second threshold. In some examples, the second threshold of system VS-2 may be substantially equal to the threshold of system VS-1. In some examples, the second threshold of system VS-2 may be greater than or less than the threshold of system VS-1. In examples, pressure sense signal 214 is indicative of a pressure sensed by a sensor other than sensor 134. Pressure sense signal 216 may be is indicative of a pressure sensed by a sensor other that utilized by ADS 128 and/or other than a sensor providing pressure sense signal 190.

In some examples, system VS-2 (e.g., the MB-2 controller) is configured to receive a pressure signal 218 indicative of the pressure of internal environment EI and a pressure signal 220 indicative of the pressure of external environment EO (e.g., provided by ADS 128). In examples, pressure signal 218 is indicative of a pressure sensed by a cabin sensor 139, which is a different sensor than sensor 134 and/or sensor 137. System VS-2 (e.g., the MB-1 controller) may be configured to determine a second determined differential pressure using pressure signal 218 and pressure signal 220, and compare the second determined differential pressure and the second differential pressure to provide a check on the operation of sensor DP2. system 100 (e.g., system VS-2, MB-2 controller) may be configured to provide an second error signal and/or second alarm if the second differential pressure and the second determined differential pressure differs by more than an alert threshold.

As discussed, controller C1 may be one of CPCS-1 or CPCS-2 in system 100 and controller C2 may be the other of CPCS-1 or CPCS-2 in system 100. System VS-1 may be one of system VO-1 configured to control first valve V-1 or system VO-2 configured to second valve V-2, and system VS-2 may be the other of system VO-1 or system VO2. In examples, controller C1 is CPCS-1 when system VS-1 is system VO-1 and controller C2 is CPCS-2 when system VS-2 is system VO-2. System 100 is configured such that either of CPCS-1 or CPCS-2 may act as controller C1 when the other of CPCS-1 or CPCS-2 acts as controller C2. Hence, in the foregoing and following discussions, controller C2 may be configured to perform any functionality using system VS-2 as that described for controller C1 using system VS-1, controller C2 may be configured to perform any functionality using system VS-1 as that described for controller C1 using system VS-2, and system VS-2 may be configured to perform any functionality with respect to VS-1 as that described for system VS-1 with respect to system VS-2.

FIG. 9 illustrates a schematic block diagram of a portion of system 100 including controller C1, auto controller AMC-1, motor MA-1, backup controller BMC-1, and motor MB-1 of system VS-1. Although FIG. 9 is discussed with reference to auto controller AMC-1, motor MA-1, backup controller BMC-1, and motor MB-1 of system VS-1 of system VS-1, auto controller AMC-2, motor MA-2, backup controller BMC-2, and motor MB-2 of system VS-2 may be configured similarly to auto controller AMC-1, motor MA-1, backup controller BMC-1, and motor MB-1 respectively. Further, controller C1 and system VS-1 may have any functionality described herein whether or not such functionality is discussed in reference to or depicted in FIG. 9.

System VS-1 may be configured such that, when system 100 operates in the first mode, controller C1 causes operation of first valve OFV-1 using first command 162 to system VS-1. In examples, system 100 (e.g., controller C1) is configured to enable the control of system VS-1 with first command 162 (e.g., to cause VS-1 to respond to first command 162) using a C1 auto signal 222. For example, system VS-1 may be configured such that auto controller AMC-1 must receive both of C1 auto signal 222 and first command 162 to cause operation of first valve OFV-1 using first command 162 from controller C1. In some examples, system VS-1 is configured such that controller C1 must provide C1 auto signal 222 in order to enable auto motor MA-1 to provide first mechanical power M1.

For example, auto controller AMC-1 may include an MCU 234 (e.g., a microprocessor) and circuitry 236 (e.g., operating circuitry and/or processing circuitry). MCU 234 may be configured to receive C1 auto signal 222 (e.g., from C1 auto enable channel 226) and first command 162 from controller C1. MCU 234 may be configured to cause circuitry 236 (e.g., via a channel 238) to cause auto motor MA-1 to produce first mechanical power M1. In examples, auto controller AMC-1 is configured to substantially prevent circuitry 236 from causing auto motor MA-1 to produce first mechanical power M1 when MCU 234 does not receive (e.g., fails to receive) C1 auto enable signal 222.

In examples, auto controller AMC-1 includes a switch 240 configured to establish an open state and a closed state. In FIG. 9, the closed state of switch 240 is depicted with a solid line and the open state of switch 240 is depicted with a dashed line. Switch 240 may be configured to allow MCU 234 to direct circuitry 236 to cause auto motor MA-1 to produce first mechanical power M1 in the closed state (e.g., as depicted in FIG. 9). Switch 240 may be configured to substantially prevent MCU 234 from directing circuitry 236 from causing auto motor MA-1 to produce first mechanical power M1 in the open state. In examples, auto controller AMC-1 is configured such that switch 240 establishes the closed state when MCU 234 receives C1 auto enable signal 222 and such that switch 240 establishes the open state when MCU 234 does not receive (e.g., fails to receive) C1 auto enable signal 222.

For example, auto controller AMC-1 may include a logic circuit 241 configured to cause switch 240 to establish the open state or the closed state based on a presence or absence of C1 auto enable signal 222. In examples, logic circuit 241 is configured to cause switch 240 to establish the closed state when auto controller AMC-1 receives C1 auto enable signal 222. Logic circuit 241 may be configured to cause switch 240 to establish the open state when auto controller AMC-1 does not receive C1 auto enable signal 222. In examples, logic circuit 241 includes one or more devices 242 (" logic device 242") configured to cause switch 240 to establish the open state or the closed state based on a presence or absence of C1 auto enable signal 222. In some examples, logic device 242 is configured as an OR type device. In some examples, auto controller AMC-1 includes one or more devices 244 ("inverter 244") configured to invert C1 auto enable signal 222, such that logic device 242 causes switch 240 to establish and/or maintain the closed state when auto controller AMC-1 receives C1 auto enable signal 222 and causes switch 240 to establish and/or maintain the open state when auto controller AMC-1 does not receive C1 auto enable signal 222.

As discussed system VS-1 may be configured to receive both first command 162 and second command 166 when system 100 operates in the first mode, however system VS-1 may be configured to preferentially utilize first command 162 over second command 166 in the first mode. In examples, system 100 may be configured to substantially prevent and/or limit system VS-1 from responding to second command 166 when system 100 operates in the first mode (e.g., to avoid controller C1 and controller C2 commanding operation of first valve OFV-1 at the same time). For example, in some examples, system VS-1 (e.g., BMC-1) may be configured to receive second command 166 via a source select device 223 in the first mode (e.g., FIG. 2) and in the second mode (e.g., FIG. 3). In examples, system 100 is configured to limit and/or disable an ability of system VS-1 (e.g., backup controller BMC-1) to respond to second command 166 when system 100 operates in the first mode.

For example, in some examples, system VS-1 is configured to substantially maintain some portion of backup controller BMC-1 in a deenergized state when system 100 operates in the first mode, such that backup controller BMC-1 is unable to respond to second command 166 in the first mode. System 100 may be configured to energize the portion of backup controller BMC-1 when system 100 transitions from the first mode to the second mode. In examples, system 100 is configured to transition from the first mode to the second mode or another mode when controller C1 issues first fault signal 180. In examples, system 100 is configured such that first fault signal 180 from controller C1 causes system VS-1 to energize the portion of backup controller BMC-1, such that backup controller BMC-1 to cause operation of first valve OFV-1 using second command 166 from controller C2 or another command.

As an example, backup controller BMC-1 may include an MCU 246 (e.g., a microprocessor) and circuitry 248 (e.g., operating circuitry and/or processing circuitry) configured to cause backup motor MB-1 to produce second mechanical power M2. Circuitry 248 may be configured to receive electrical power from a power supply 235 (e.g., via a power conduit 251). Backup controller BMC-1 may include a switch 252 configured to deliver electrical power from power supply 235 to circuitry 248 in a closed state and substantially prevent circuitry 248 from receiving electrical power from power supply 235 in an open state. In FIG. 9, for switch 252, the closed state is depicted with a solid line and the open state is depicted with a dashed line. Backup controller BMC-1 may be configured to substantially maintain circuitry 248 in a deenergized state unless system 100 transitions from the first mode to another mode (e.g., the second mode, the first backup mode, the second backup mode, and/or the manual mode).

In examples, system 100 is configured to transition from the first mode to another mode when controller C1 issues first fault signal 180. In examples, system 100 is configured to enable backup controller BMC-1 to cause operation of first valve OFV-1 in response to first fault signal 180 (e.g., from controller C1). For example, backup controller BMC-1 may include a logic circuit 253 configured to cause switch 252 to establish the closed state based on a presence of first fault signal 180. In examples, logic circuit 253 includes one or more devices 256 (" logic device 256") and/or one or more devices 254 (" logic device 254") configured to cause switch 252 to establish the closed state based on the presence of first fault signal 180.

In some examples, logic device 256 and/or logic device 254 are configured as an OR type device. Logic device 256 (e.g., via a channel 255) may be configured to receive first fault signal 180 and enable logic circuit 253 to cause the closure of switch 252, such that controller BMC-1 may cause operation of first valve OFV-1 (e.g., using second command 166 or another command).

In examples, source select device 223 may be configured to communicate second command 166 (e.g., to MCU 246) when system 100 operates in the second mode and limit (e.g., prevent) communication of second command 166 (e.g., to MCU 246) when system 100 operates in the first mode. In examples, source select device 223 is configured to communicate and/or limit communication of second command 166 based on a presence or absence of first fault signal 180. For example, source select device 223 may be configured to provide second command 166 to MCU 246 when source select device 223 receives first fault signal 180 (e.g., via a channel 225). Source select device 223 may be configured to limit communication of second command 166 to MCU 246 in the absence of first fault signal 180 (e.g., when controller C1 is not in a faulted condition).

Hence, system 100 may be configured to transition from the first mode wherein first command 162 causes operation of first valve OFV-1 using auto controller AMC-1 to the second mode or another mode wherein second command 166 or another command causes operation of first valve OFV-1 using backup controller BMC-1. In examples, system 100 transitions from the first mode to the second mode or other mode in response to a detected fault in controller C1. Controller C1 may issue first fault signal 180 and cause power supply 235 to provide electrical power to circuitry 248 via switch 252 such that circuitry 248 may cause backup motor MB-1 to provide second mechanical power M2 to gearbox 184. First fault signal 180 issued by controller C1 may cause source select device 223 to communicate second command 166 to MCU 246 such that MCU 246 may direct circuitry 248 based on second command 166.

System 100 is configured to transition from the second mode wherein controller C2 causes operation of first valve OFV-1 (and second valve OFV-2 (FIG. 1)) to the first backup mode wherein backup controller BMC-1 controls the operation of first valve OFV-1 and second valve OFV-2. In examples, system 100 is configured to transition from the second mode to the first backup mode when controller C2 issues second fault signal 182. In examples, system 100 is configured such that second fault signal 182 causes backup controller BMC-1 to issue backup command 165 (FIG. 5) to circuitry 248 to cause operation of backup motor MB-1 and issue backup command 167 (FIG. 5) to backup motor MB-2 of system VS-2 (FIG. 2). In examples, backup controller BMC-1 (e.g., MCU 246) formulates backup command 165 and backup command 167 using pressure signal 192. In some examples, backup controller BMC-1 is configured such that the backup command to circuitry 248 and backup command 167 cause first valve OFV-1 and second valve OFV-2 to establish similar positions, although this is not required.

System 100 is configured to transition from the first backup mode wherein backup controller BMC-1 causes operation of first valve OFV-1 (and second valve OFV-2 (FIG. 2)) to the second backup mode wherein backup controller BMC-2 (FIG. 8) controls the operation of first valve OFV-1 (and second valve OFV-2). In examples, system 100 is configured to transition from the first backup mode to the second backup mode when backup controller BMC-1 issues third fault signal 185. In examples, system 100 is configured such that third fault signal 185 causes backup controller BMC-2 to issue backup command to 171 (FIG. 6) cause operation of backup motor MB-2 and issue backup command 169 (FIG, 6) to cause operation of backup motor MB-1. Backup controller BMC-2 (e.g., a microprocessor configured similarly to MCU 246) may formulate backup command 171 and backup command 169 using a pressure signal similar to pressure signal 192. In some examples, backup motor BMC-2 is configured such that backup command 171 and backup command 169 cause first valve OFV-1 and second valve OFV-2 to establish similar positions, although this is not required.

System 100 may be configured cause the operation of first valve OFV-1 using manual command 141 issued by manual system 142. System 100 may be configured to cause the operation of first valve OFV-1 when system controller C1 is controlling first valve OFV-1 (e.g., in the first mode), when system controller C2 is controlling first valve OFV-1 (e.g., in the second mode), and/or when backup controller BMC-1 or backup controller BMC-2 is controlling first valve OFV-1 (e.g., in a backup mode). System 100 may be configured such that backup controller BMC-1 controls first valve OFV-1 when manual system 142 issues manual command 141. In examples, manual system 142 provides manual command 141 to source select device 223 and source select device 223 provides manual command 141 to MCU 246. In some examples, source select device 223 is configured to preferentially provide manual command 141 to MCU 246 over second command 166 or backup command 165.

In examples, system 100 is configured such that manual command 141 disables auto controller AMC-1 causing operation of first valve OFV-1 and/or enables backup controller BMC-1 to cause operation of first valve OFV-1. For example, system 100 may include a C1 auto enable switch 230 configured to allow auto controller AMC-1 to receive C1 auto signal 222 in a closed state and substantially prevent auto controller AMC-1 from receiving C1 auto signal 222 in an open state, such that auto controller AMC-1 is disabled from causing operation of first valve OFV-1 when C1 auto enable switch is in the open state (e.g., because auto controller AMC-1 does not receive C1 auto signal 222). System 100 may be configured such that manual command 141 causes C1 auto enable switch 230 to establish the open state.

In some examples, manual command 141 causes switch 252 to establish the closed position to enable backup controller BMC-1 to cause operation of first valve OFV-1. Logic device 256 (e.g., via a channel 261) may enable logic circuit 253 to cause the closure of switch 252, such that controller BMC-1 may be cause operation of first valve OFV-1 using manual command 141. Logic device 256 may be configured to provide the first input to logic device 254 (e.g., via channel 257) such that logic circuit 253 to causes the closure of switch 252. Hence, system 100 may be configured to cause the operation of first valve OFV-1 when system controller C1 is controlling first valve OFV-1 (e.g., in the first mode), when system controller C2 is controlling first valve OFV-1 (e.g., in the second mode), and/or when backup controller BMC-1 or backup controller BMC-2 is controlling first valve OFV-1 (e.g., in a backup mode).

System VS-1 may be further configured to cause operation of first valve OFV-1 based on a differential pressure (e.g., between internal environment E1 and external environment EO) sensed by sensor DP1. Sensor DP1 may be configured to provide a DP signal 264 indicative of the differential pressure to a first microprocessor of system VS-1 (e.g., MCU 246). System VS-1 may be configured to cause the operation of first valve OFV-1 (e.g., using the first microprocessor) when DP signal 264 is greater than or equal to a threshold. In examples, system VS-1 is configured to substantially limit controller C1 from causing operation of OFV-1 when DP signal 264 is greater than or equal to the threshold.

System VS-1 may be configured to substantially confirm that DP signal 264 is greater than or equal to the threshold using a software circuit comprising the first microprocessor (e.g., MCU 246) and a microprocessor 266 ("sensor MCU 266"). Sensor DP1 may be configured to provide DP signal 264 to both the first microprocessor and sensor MCU 266. Sensor MCU 266 may be configured to issue a first input 268 to a logic circuit 270 (e.g., a comparative device) when sensor MCU 266 assesses DP signal 264 as greater than or equal to the threshold. The first microprocessor may be configured to issue a second input 272 to logic circuit 270 when the first microprocessor assess DP signal 264 as greater than or equal to the threshold. Logic circuit 270 may be configured to provide an alert signal 274 if both of first input 268 and second input 272 indicate that DP signal 264 as greater than or equal to the threshold (e.g., if first input 268 and second input 272 indicate the first microprocessor and sensor MCU 266 agree). System VS-1 may be configured to substantially limit controller C1 and controller C2 from causing operation of OFV-1 when logic circuit 270 provides alert signal 274. In examples, logic circuit 270 includes one or more logic devices (e.g., one or more AND type logic devices). In examples, system VS-1 is configured such that MCU 246 (of backup controller BMC-1) is the first microprocessor. MCU 246 may be configured to direct circuitry 248 (e.g., via channel 250) to cause backup motor MB-1 to produce second mechanical power M2 when logic circuit 270 provides alert signal 274.

In examples, system VS-1 is configured to provide alert signal 274 to auto controller AMC-1 (e.g., via channel 276) to substantially prevent operation of OFV-1 by auto controller AMC-1. For example, system VS-1 may be configured to provide alert signal 274 to logic circuit 241. Logic circuit 241 (e.g., logic device 242) may be configured to cause switch 240 to establish and/or maintain the open state when logic circuit 241 receives alert signal 274, such that MCU 234 is limited and/or prevented from directing circuitry 236 to cause MA-1 motor to produce first mechanical power M1. Hence, in examples, logic circuit 241 (e.g., logic device 242) is configured to establish and/or maintain switch 240 in the open state when either of: (i) logic circuit 241 receives alert signal 274, or (ii) C1 auto enable signal 222 is not received by MCU 234 (e.g., due to inverter 244). In some examples, logic circuit 241 (e.g., logic device 242) is configured to establish and/or maintain switch 240 in the closed state only when both of: (i) logic circuit 241 does not receive alert signal 274, and (ii) C1 auto enable signal 222 is received by MCU 234 (e.g., due to inverter 244).

System VS-1 may be configured to allow operation of OFV-1 by MCU 246 and/or circuitry 248 when logic circuit 270 provides alert signal 274. In some examples, MCU 246 is configured to direct circuitry 248 to cause MB-1 motor to further open or fully open first valve OFV-1 when logic circuit 270 provides alert signal 274 (e.g., using a backup motor command). In some examples, logic circuit 253 is configured to cause switch 252 to establish and/or maintain the closed state when logic circuit 253 receives alert signal 274, such that circuitry 248 may respond to commands provided by MCU 246. For example, logic circuit 253 (e.g., logic device 254) may be configured to cause switch 252 to establish and/or maintain the closed state when logic circuit 253 receives alert signal 274 (e.g., via a channel 277). Hence, in examples, logic circuit 253 is configured to establish and/or maintain switch 240 in the closed state when either of: (i) logic circuit 253 receives alert signal 274, (ii) controller C1 issues first fault signal 180, or (iii) manual system 142 issues manual command 141. In some examples, logic circuit 253 (e.g., logic device 254) is configured to establish and/or maintain switch 240 in the open state only when all of: (i) logic circuit 253 does not receive alert signal 274, (ii) controller C1 does not issue first fault signal 180, and (iii) manual system 142 does not issue manual command 141.

Logic circuit 241 (e.g., logic device 242 and/or inverter 244) and/or switch 240 provide an example through which auto controller AMC-1 may be configured to cause operation of first valve OFV-1 when auto controller AMC-1 receives C1 auto enable signal 222. Auto controller AMC-1 may be configured to cause operation of first valve OFV-1 when auto controller AMC-1 receives C1 auto enable signal 222 in other ways in other examples. Logic circuit 253 (e.g., logic device 254 and/or logic device 254) and/or switch 252 provide an example through which backup controller BMC-1 may be configured to cause operation of first valve OFV-1 when backup controller BMC-1 controller receives first fault signal 180, manual command 141, and/or alert signal 274. Backup controller BMC-1 may be configured to cause operation of first valve OFV-1 when MB-1 controller receives when backup controller BMC-1 controller receives first fault signal 180, manual command 141, and/or alert signal 274 in other ways in other examples. Logic circuit 241 may be configured to cause operation of switch 240 based on other inputs to logic circuit 241 in addition to C1 auto enable signal 222, such as one or more other inputs indicative of a fault detection within system 100. Logic circuit 253 may be configured to cause operation of switch 252 based on additional inputs to logic circuit 253 in addition to C2 auto enable signal 224, such as one or more additional inputs indicative of a fault detection within system 100. MCU 234 may be configured to receive one or more other MCU inputs in addition to first command 162 and C1 auto enable signal 222, such as one or more other MCU inputs indicative of a fault detection within system 100. MCU 246 may be configured to receive one or more other MCU inputs in addition to first command 162 and C1 auto enable signal 222, such as one or more additional MCU inputs indicative of a fault detection within system 100.

In some examples, first valve OFV-1 includes a butterfly valve that can rotate to increase or decrease a fluid flow rate through first valve OFV-1. First valve OFV-2 may include a butterfly valve that can rotate to increase or decrease a fluid flow rate through second valve OFV-2. First valve OFV-1 and/or second valve OFV-2 may be positioned within bulkhead 107 of a vehicle 102 (e.g., an aircraft) and may be in flow communication with internal environment EI and external environment EO. In some examples, first valve OFV-1 and/or second valve OFV-2 include a thrust recovery valve configured and/or positioned on vehicle 102 such that air exhausted from compartments 112 provides forward thrust to vehicle 102. In some examples, a first position sensor in gearbox 184 and/or proximate first valve OFV-1 may sense the position of first valve OFV-1. The first position sensor may be configured to provide a first signal indicative of a position of first valve OFV-1 to controller C1, controller C2, system VS-1, and/or system VS-2. In some examples, a second position sensor in gearbox 212 and/or proximate second valve OFV-2 may sense the position of second valve OFV-2. The second position sensor may be configured to provide a second signal indicative of a position of second valve OFV-2 to controller C1, controller C2, system VS-1, and/or system VS-2.

Auto enable switch 230, auto enable switch 232, switch 240, switch 252, and/or switch 278 may be any switching device configured to establish the open state and the closed state, such as a contact, a mechanical switch, one or more logic devices, or another group of devices configured to establish the open state and the closed state. In examples, the switching device comprises at least one input configured to receive a voltage and at least one output configured to deliver a voltage. The switching device may be configured to electrically connect the input and the output in the closed state and substantially electrically isolate the input and the output in the open state.

Controller C1, controller C2, MCU 234, circuitry 236, MCU 246, sensor MCU 266, and/or other control circuitry of system 100 (collectively, "system 100 circuitry") may include fixed function circuitry and/or programmable operating circuitry. In examples, system 100 circuitry includes circuitry configured to perform one or more functions of operating circuitry, such as sensing circuitry, processing circuitry, switching circuitry, communication circuitry, and/or other circuitries. system 100 circuitry, as well as other processors, operating circuitry, controllers, control circuitry, processing circuitry, and the like, described herein, may include any combination of integrated circuitry, discrete logic circuitry, analog circuitry, such as one or more microprocessors, digital signal processors (DSPs), application specific integrated circuits (ASICs), or field-programmable gate arrays (FPGAs). In some examples, any one or more of controller C1, controller C2, MCU 234, circuitry 236, MCU 246, and/or other control circuitry of system 100 may include fixed function circuitry and/or programmable operating circuitry includes multiple components, such as any combination of one or more microprocessors, one or more DSPs, one or more ASICs, or one or more FPGAs, as well as other discrete or integrated logic circuitry, and/or analog circuitry.

Functions attributed to system 100 circuitry may be embodied as software, firmware, hardware or any combination thereof. system 100 circuitry may include, for instance, a variety of capacitors, transformers, switches, and the like configured to perform the functions of system 100 circuitry. In examples, system 100 circuitry may be configured to communicate with another device of system 100 and/or vehicle 102, such as ECS 118, engine 120, components of air supply system 119, and/or components of system 100 and/or vehicle 102. system 100 circuitry may include any suitable hardware, firmware, software or any combination thereof for communicating with another device. In some examples, system 100 circuitry may communicate with a networked computing device and a computer network.

System 100 circuitry can also include memory configured to store program instructions, such as software, which may include one or more program modules, which are executable by system 100 circuitry. The program instructions may be embodied in software and/or firmware. The memory can include any volatile, non-volatile, magnetic, optical, or electrical media, such as a random access memory (RAM), read-only memory (ROM), non-volatile RAM (NVRAM), electrically-erasable programmable ROM (EEPROM), ferroelectric RAM (FRAM), flash memory, or any other digital media. In some examples, the memory includes computer-readable instructions that, when executed by system 100 circuitry, perform various functions described herein and/or other functions of system 100 circuitry.

Actuator 148 may have any suitable configuration. For example, actuator 148 can include a switch (e.g., a mechanical switch), a button or keypad, a speaker configured to receive voice commands from a user, a display, such as a liquid crystal (LCD), light-emitting diode (LED), or organic light-emitting diode (OLED). In some examples, actuator 148 may include a touch screen. Manual system 142 may be configured to receive a user input. In some examples, manual system 142 is also configured to display information, such as one or more indications providing information on a status of controller C1, controller C2, system VS-1, and/or system VS-2.

Communication link 124, 126, 130, 132, 152, 154, 155, 157, 146, 158, 179, 181 (collectively "communication links 124-181") and/or C1 auto enable channel 226 and/or channel 225, 238, 250, 255, 257, 259, 261, 276, 277 (collectively "channels 226-277") may be wired and/or wireless communications links. In some examples, communication links 124-181 and/or channels 226-277 may comprise some portion of one or more of system 100 circuitry. In some examples, communication links 124-181 and/or channels 226-277 comprise a wired connection, a wireless Internet connection, a direct wireless connection such as wireless LAN, Bluetooth^{™}, Wi-Fi^{™}, and/or an infrared connection. Communication links 124-181 and/or channels 226-277 may utilize any wireless or remote communication protocol.

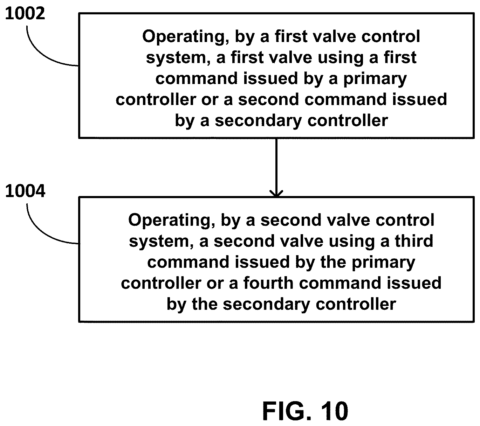

FIG. 10 is a flow diagram illustrating an example technique for controlling a pressure of an internal environment EI within compartments 112 of a vehicle 102. While the technique is described with reference to system 100 described herein, the technique may be used with other components and/or systems in other examples.

The technique includes operating, using a system VS-1, a first valve OFV-1 using one of a first command 162 or a second command 166 (1002). The technique includes operating, using a system VS-2, a second valve OFV-2 using one of a third command 164 or a fourth command 168 (1004). In examples, a controller C1 issues first command 162 and third command 164. A controller C2 may issue second command 166 and fourth command 168. In some examples, controller C1 issues first command 162 to system VS-1 and issues third command 164 to controller C2. Controller C2 may issue third command 164, second command 166, and fourth command 168 to system VS-2. In examples, controller C1 formulates first command 162 and third command 164 based on at least one of a pressure of an internal environment EI within compartments 112 or a differential pressure between the internal environment EI and an external environment EO surround the vehicle. Controller C2 may formulate second command 166 and fourth command 168 based on at least one of the pressure of the internal environment EI or the differential pressure.

In examples, system VS-1 provides first command 162 to an auto controller AMC-1. Auto controller AMC-1 may provide first command 162 to an auto motor MA-1 to cause the operation of first valve OFV-1. In examples, auto motor MA-1 produces a first mechanical power M1 to operate first valve OFV-1 when auto motor MA-1 receives first command 162. System VS-1 may provide second command 166 to a backup controller BMC-1. Backup controller BMC-1 may provide second command 166 to a backup motor MB-1 to cause the operation of first valve OFV-1. In examples, backup motor MB-1 produces a second mechanical power M2 to operate first valve OFV-1 when backup motor MB-1 receives second command 166. A gearbox 184 may receive at least one of first mechanical power M1 from auto motor AMC-1 or receive second mechanical power M2 from backup motor BMC-1 and cause operation of first valve OFV-1 using first mechanical power M1 or second mechanical power M2.

In examples, system VS-2 provides third command 164 to an auto controller AMC-2. Auto controller AMC-2 may provide third command 164 or fourth command 168 to an auto motor MA-2 to cause the operation of second valve OFV-2. In examples, auto motor MA-2 produces a third mechanical power M3 to operate second valve OFV-2 when auto motor MA-2 receives third command 164 or fourth command 168. A gearbox 212 may receive at least one of third mechanical power M3 or fourth mechanical power M4 from auto motor AMC-2 and cause operation of first valve OFV-1 using third mechanical power M3 or fourth mechanical power M4.

First system VS-1 may provide second command 166 to backup controller BMC-1 and second system VS-1 may provide fourth command 168 to auto controller AMC-1 if controller C1 fails to send first command 162 or fails to send third command 164, or if first command 162 fails cause the operation of first valve OFV-1, or if third command 164 fails to cause operation of second valve OFV-2. In examples, first system VS-1 provides second command 166 to backup controller BMC-1 and second system VS-1 provides fourth command 168 to auto controller AMC-1 if controller C1 issues a first fault signal 180.

The technique may include operating, using backup controller BMC-1, first valve OFV-1 using a first backup command issued by backup controller BMC-1 and second valve OFV-2 using a second backup command (e.g., backup command 167) issued by backup controller BMC-1. Backup controller BMC-1 may issue the first backup command and second backup command if controller C2 fails to send second command 166 or fails to send fourth command 168, or if second command 166 fails to cause the operation of first valve OFV-1, or if fourth command 168 fails to cause the operation of second valve OFV-2. Backup controller BMC-1 may cause operation of first valve OFV-1 using the first backup command. Backup controller BMC-2 may cause the operation of second valve OFV-2 using the second backup command. In examples, backup controller BMC-1 issues the first backup command and the second backup command if controller C2 issues a second fault signal 182.

The technique may include operating, using backup controller BMC-2, first valve OFV-1 using a third backup command (e.g., backup command 165) issued by backup controller BMC-2 and second valve OFV-2 using a fourth backup command issued by backup controller BMC-2. Backup controller BMC-2 may issue the third backup command and the fourth backup command if backup controller BMC-1 fails to send the first backup command or fails to send the second backup command, or if the first backup command fails to cause the operation of first valve OFV-1, or if the second backup command fails to cause the operation of second valve OFV-2. Backup controller BMC-1 may cause operation of first valve OFV-1 using the third backup command. Backup controller BMC-2 may cause the operation of second valve OFV-2 using the fourth backup command. In examples, backup controller BMC-2 issues the third backup command and the fourth backup command if backup controller BMC-1 issues a third fault signal 185.

In examples, the technique includes operating, using a manual command 141 from a manual system 142, at least one of first valve OFV-1 or second valve OFV-2. In examples, backup controller BMC-1 causes backup motor MA-1 to cause operation of first valve OFV-1 using manual command 141. In examples, backup controller BMC-1 causes backup motor MB-1 to cause operation of first valve OFV-1 using manual command 141. Backup controller BMC-2 may cause backup motor MB-1 to cause operation of second valve OFV-2 using manual command 141.

In some examples, at least one sensor (sensor DP1 or sensor DP2) is configured to sense the differential pressure between internal environment E1 and external environment EO and cause operation of a valve (e.g., one of first valve OFV-1 or second valve OFV-2). System 100 may substantially disable an ability of first command 162 and second command 166 to cause operation of first valve OFV-1, and/or substantially disable an ability of third command 164 and fourth command 168 to cause operation of first valve OFV-2, when the senses a differential pressure greater than or equal to a threshold. In examples, the sensor provides the sensed differential pressure to a backup controller (e.g., one of backup controller BMC-1 or backup controller BMC-2). The backup controller may cause a backup motor (e.g., one of backup motor MB-1 or backup motor MB-2) to cause operation of the valve when the sensor senses a differential pressure greater than or equal to the threshold.

The disclosure includes the following examples.

Example 1: A pressure control system for a compartment of a vehicle, the system comprising: a primary controller configured to issue a first command and configured to issue a third command; a secondary controller configured to issue a second command and configured to issue a fourth command; a first valve configured to fluidically couple an internal environment within the compartment and an external environment surrounding the vehicle; a first valve control system including a first auto controller and a first backup controller, wherein the first valve control system is configured to operate the first valve by one of providing the first command to the first auto controller or providing the second command to the first backup controller; a second valve configured to fluidically couple the internal environment and the external environment; and a second valve control system including a second auto controller and a second backup controller, wherein the second valve control system is configured to operate the second valve by one of providing the third command to the second auto controller or providing the fourth command to the second auto controller, wherein the first valve control system is configured to provide the second command to the first backup controller and the second valve control system is configured to provide the fourth command to the second auto controller when the primary controller fails to send the first command or fails to send the third command, or when the first command fails cause the operation of the first valve, or when the third command fails to cause the operation of the second valve, wherein the first backup controller is configured to issue a first backup command and issue a second backup command when the secondary controller fails to send the second command or fails to send the fourth command, or when the second command fails to cause the operation of the first valve, or when the fourth command fails to cause the operation of the second valve, and wherein the first backup controller is configured to operate the first valve using the first backup command and the second backup controller is configured to operate the second valve using the second backup command.

Example 2: The system of example 1, wherein the second backup controller is configured to issue a third backup command to the first backup controller and a fourth backup command to the second backup controller when the first backup controller fails to send the first backup command or fails to send the fourth backup command, or when the first backup command fails to cause the operation of the first valve, or when the second backup command fails to cause the operation of the second valve, and wherein the first backup controller is configured to operate the first valve using the third backup command and the second backup controller is configured to operate the second valve using the fourth backup command.

Example 3: The system of example 1 or example 2, wherein at least one of: the first valve control system is configured to cause the first backup controller to operate the first valve when one of a pressure of the internal environment exceeds a pressure threshold or a differential pressure between the pressure of the internal environment and a pressure of the external environment exceeds the differential pressure threshold, or the second valve control system is configured to cause the second backup controller to operate the second valve when the one of the pressure of the internal environment exceeds the pressure threshold or the differential pressure exceeds the differential pressure threshold.

Example 4: The system of any of examples 1-3, wherein the system is configured to provide the third command to the second valve control system by one of: providing the third command from the primary controller to the secondary controller and then providing the third command from the secondary controller to the second valve control system, or providing the third command from the primary controller to the second valve control system, such that the third command substantially bypasses the secondary controller.

Example 5: The system of any of examples 1-4, further comprising a manual controller configured to issue a first manual command to the first valve control system and configured to issue a second manual command to the second valve control system, wherein the first valve control system is configured to cause the first backup controller to operate the first valve using the first manual command, and wherein the second valve control system is configured to cause the second backup controller to operate the second valve using the second manual command.

Example 6: The system of any of examples 1-5, wherein the primary controller is configured to provide an enable signal, and wherein the first valve control system is configured to communicate the first command to the first auto controller when the first valve control system receives the enable signal.

Example 7: The system of example 6, wherein the first valve control system includes a first auto motor configured to operate the first valve when first auto controller communicates the first command to the first auto motor, and wherein the first valve control system is configured to enable the communication of the first command from the first auto controller to the first auto motor when the first valve control system receives the enable signal.

Example 8: The system of any of examples 1-7, wherein the primary controller is configured to issue a fault signal, and wherein the first valve control system is configured to communicate the second command to the first backup controller when primary controller issues the fault signal.

Example 9: The system of example 8, wherein the first valve control system includes a first backup motor configured to operate the second valve when the first backup controller receives the second command, and wherein the first valve control system is configured to enable the communication of the second command from the first backup controller to the first backup motor when the first valve control system receives the fault signal.

Example 10: The system of any of examples 1-9, wherein the first controller is configured to issue the first command and issue the third command based on at least one of a pressure of the internal environment or a differential pressure between the pressure of the internal environment and a pressure of the external environment, and wherein the secondary controller is configured to issue the second command and issue the fourth command based on at least one of the pressure of the internal environment or the differential pressure.

Example 11: The system of any of examples 1-10, the secondary controller is configured to issue a second fault signal, and wherein the first backup controller is configured to issue the first backup command and the second backup command when the secondary controller issues the second fault signal.

Example 12: The system of any of examples 1-11, further comprising: a first auto motor configure to provide a first mechanical power to cause operation of the first valve when the first valve control system provides the first command to the first auto controller; a first backup motor configured to provide a second mechanical power to cause operation of the first valve when the first valve control system provide the second command to the first backup controller; a second auto motor configure to provide a third mechanical power to cause operation of the second valve when the second valve control system provides the third command or the fourth command to the second auto controller; and a second backup motor configured to provide a fourth mechanical power to cause operation of the second valve when the first backup controller provides the second backup command to the second backup controller.

Example 13: The system of example 12, further comprising: a first gearbox configured to receive the first mechanical power and the second mechanical power, wherein the first gearbox is configured to operate the first valve when the first gearbox receives at least one of the first mechanical power or the second mechanical power; and a second gearbox configured to receive the third mechanical power and the fourth mechanical power, wherein the second gearbox is configured to operate the second valve when the second gearbox receives at least one of the third mechanical power or the fourth mechanical power.

Example 14: The system of any of examples 1-13, wherein the primary controller is one of a first cabin pressure control system (CSPS-1) or a second cabin pressure control system (CSPS-2) and the secondary controller is the other of the CSPS-1 or the CSPS-2, wherein the CSPS-1 is configured to operate as the primary controller when the CSPS-2 operates as the secondary controller and the CSPS-2 is configured to operate as the primary controller when the CSPS-1 operates as the secondary controller, wherein the first valve is one of first outflow valve (OFV-1) or a second outflow valve (OFV-2) and the second valve is the other of the OFV-1 or the OFV-2, wherein the first valve control system is one of a first valve operation system (VO-1) configured to operate the OFV-1 or a second valve operation system (VO-2) configured to operate the OFV-2 and the second valve control system is the other of the VO-1 or the VO-2, wherein the VO-1 is configured to operate as the first valve control system and the VO-2 is configured to operate as the second valve control system when the CSPS-1 operates as the primary controller and the CSPS-2 operates as the secondary controller, and wherein the VO-2 is configured to operate as the first valve control system and the VO-1 is configured to operate as the second valve control system when the CSPS-2 operates as the primary controller and the CSPS-1 operates as the secondary controller.

Example 15: The system of example 14, wherein at least one of the CSPS-1 or the CSPS-2 is configured to track when the CSPS-1 operates as the primary controller during a first operating period, and wherein the at least one of the CSPS-1 or the CSPS-2 is configured to cause the CSPS-1 to operate as the secondary controller during a second operating period subsequent to the first operating period.

Example 16: A pressure control system for a compartment of a vehicle, the system comprising: a primary controller configured to issue a first command and configured to issue a third command; a secondary controller configured to issue a second command and configured to issue a fourth command; a first valve configured to fluidically couple an internal environment of the compartment and an external environment surrounding the vehicle; a first valve control system including a first auto controller and a first auto motor and including a first backup controller and a first backup motor, wherein the first valve control system is configured to operate the first valve by one of providing the first command to the first auto controller to cause the first auto motor to produce a first mechanical power, or providing the second command to the first backup controller to cause the first backup motor to produce a second mechanical power; a second valve configured to fluidically couple the compartment and the external environment; and a second valve control system including a second auto controller and a second auto motor and including a second backup controller and a second backup motor, wherein the second valve control system is configured to operate the second valve by one of providing the third command to the second auto controller to cause the second auto motor to produce a third mechanical power, or providing the fourth command to the second auto controller to cause the second auto motor to produce a fourth mechanical power, wherein the first valve control system is configured to provide the second command to the first backup controller and the second valve control system is configured to provide the fourth command to the second auto controller when the primary controller fails to send the first command or fails to send the third command, or when the first command fails cause the operation of the first valve, or when the third command fails to cause the operation of the second valve, wherein the first backup controller is configured to issue a first backup command and issue a second backup command when the secondary controller fails to send the second command or fails to send the fourth command, or when the second command fails to cause the operation of the first valve, or when the fourth command fails to cause the operation of the second valve, wherein the second backup controller is configured to issue a third backup command and issue a fourth backup command when the first backup controller fails to send the first backup command or fails to send the fourth backup command, or when the first backup command fails to cause the operation of the first valve, or when the second backup command fails to cause the operation of the second valve, and wherein the first backup controller is configured to operate the first valve using the first backup command or the third backup command and the second backup controller is configured to operate the second valve using the second backup command or the fourth backup command.

Example 17: The system of example 16, further comprising: a first gearbox configured to receive the first mechanical power and the second mechanical power, wherein the first gearbox is configured to operate the first valve when the first gearbox receives at least one of the first mechanical power or the second mechanical power; and a second gearbox configured to receive the third mechanical power and the fourth mechanical power, wherein the second gearbox is configured to operate the second valve when the second gearbox receives at least one of the third mechanical power or the fourth mechanical power.

Example 18: The system of example 16 or example 17 wherein at least one of: the first valve control system is configured to cause the first backup controller to operate the first valve when one of a pressure of the internal environment exceeds a pressure threshold or a differential pressure between the pressure of the internal environment and a pressure of the external environment exceeds a differential pressure threshold, or the second valve control system is configured to cause the second backup controller to operate the second valve when the one of the pressure of the compartment exceeds the pressure threshold or the differential pressure exceeds the differential pressure threshold.

Example 19: A method, comprising: operating, by a first valve control system, a first valve by one of providing a first command issued by a primary controller to a first auto controller or providing a second command issued by a secondary controller to a first backup controller; operating, by a second valve control system, a second valve by one of providing a third command issued by the primary controller to a second auto controller or providing a fourth command issued by the secondary controller to a first backup controller, wherein the first valve control system provides the second command and the second valve control system provides the fourth command if the primary controller fails to send the first command or fails to send the third command, or if the first command fails cause the operation of the first valve, or if the third command fails to cause the operation of the second valve; and operating, using the first backup controller, the first valve using a first backup command issued by the first backup controller and the second valve using a second backup command issued by the first backup controller if the secondary controller fails to send the second command or fails to send the fourth command, or if the second command fails to cause the operation of the first valve, or if the fourth command fails to cause the operation of the second valve, wherein the first backup controller is configured to operate the first valve using the first backup command the second backup controller is configured to operate the second valve using the second backup command.

Example 20: The method of example 19, further comprising operating, using the second backup controller, the first valve using a third backup command issued by the second backup controller and the second valve using a fourth backup command issued by the second backup controller if the first backup controller fails to send the first backup command or fails to send the second backup command, or if the first backup command fails to cause the operation of the first valve, or if the second backup command fails to cause the operation of the second valve, wherein the first backup controller is configured to operate the first valve using the third backup command the second backup controller is configured to operate the second valve using the fourth backup command.

Various examples have been described. These and other examples are within the scope of the following claims.

## Claims

1. A pressure control system for a compartment of a vehicle, the system comprising:
a primary controller configured to issue a first command and configured to issue a third command;
a secondary controller configured to issue a second command and configured to issue a fourth command;
a first valve configured to fluidically couple an internal environment within the compartment and an external environment surrounding the vehicle;
a first valve control system including a first auto controller and a first backup controller, wherein the first valve control system is configured to operate the first valve by one of providing the first command to the first auto controller or providing the second command to the first backup controller;
a second valve configured to fluidically couple the internal environment and the external environment; and
a second valve control system including a second auto controller and a second backup controller, wherein the second valve control system is configured to operate the second valve by one of providing the third command to the second auto controller or providing the fourth command to the second auto controller,
wherein the first valve control system is configured to provide the second command to the first backup controller and the second valve control system is configured to provide the fourth command to the second auto controller when at least one of:
the primary controller fails to send the first command or fails to send the third command,
the first command fails cause the operation of the first valve, or
the third command fails to cause the operation of the second valve,
wherein the first backup controller is configured to issue a first backup command and issue a second backup command when at least one of:
the secondary controller fails to send the second command or fails to send the fourth command,
the second command fails to cause the operation of the first valve, or
the fourth command fails to cause the operation of the second valve, and
wherein the first backup controller is configured to operate the first valve using the first backup command and the second backup controller is configured to operate the second valve using the second backup command.

2. The system of claim 1,
wherein the second backup controller is configured to issue a third backup command to the first backup controller and a fourth backup command to the second backup controller when at least one of:
the first backup controller fails to send the first backup command or fails to send the fourth backup command,
the first backup command fails to cause the operation of the first valve, or
the second backup command fails to cause the operation of the second valve, and
wherein the first backup controller is configured to operate the first valve using the third backup command and the second backup controller is configured to operate the second valve using the fourth backup command.

3. The system of claim 1 or 2, wherein at least one of:
the first valve control system is configured to cause the first backup controller to operate the first valve when one of a pressure of the internal environment exceeds a pressure threshold or a differential pressure between the pressure of the internal environment and a pressure of the external environment exceeds the differential pressure threshold, or
the second valve control system is configured to cause the second backup controller to operate the second valve when the one of the pressure of the internal environment exceeds the pressure threshold or the differential pressure exceeds the differential pressure threshold.

4. The system of any of claims 1 to 3, wherein the system is configured to provide the third command to the second valve control system by one of:
providing the third command from the primary controller to the secondary controller and then providing the third command from the secondary controller to the second valve control system, or
providing the third command from the primary controller to the second valve control system, such that the third command substantially bypasses the secondary controller.

5. The system of any of claims 1 to 4, further comprising a manual controller configured to issue a first manual command to the first valve control system and configured to issue a second manual command to the second valve control system,
wherein the first valve control system is configured to cause the first backup controller to operate the first valve using the first manual command, and
wherein the second valve control system is configured to cause the second backup controller to operate the second valve using the second manual command.

6. The system of any of claims 1 to 5,
wherein the primary controller is configured to provide an enable signal, and
wherein the first valve control system is configured to communicate the first command to the first auto controller when the first valve control system receives the enable signal.

7. The system of claim 6,
wherein the first valve control system includes a first auto motor configured to operate the first valve when first auto controller communicates the first command to the first auto motor, and
wherein the first valve control system is configured to enable the communication of the first command from the first auto controller to the first auto motor when the first valve control system receives the enable signal.

8. The system of any of claims 1 to 7,
wherein the primary controller is configured to issue a fault signal, and
wherein the first valve control system is configured to communicate the second command to the first backup controller when primary controller issues the fault signal.

9. The system of claim 8,
wherein the first valve control system includes a first backup motor configured to operate the second valve when the first backup controller receives the second command, and
wherein the first valve control system is configured to enable the communication of the second command from the first backup controller to the first backup motor when the first valve control system receives the fault signal.

10. The system of any of claims 1 to 9,
wherein the first controller is configured to issue the first command and issue the third command based on at least one of a pressure of the internal environment or a differential pressure between the pressure of the internal environment and a pressure of the external environment, and
wherein the secondary controller is configured to issue the second command and issue the fourth command based on at least one of the pressure of the internal environment or the differential pressure.

11. The system of any of claims 1 to 10,
wherein the secondary controller is configured to issue a second fault signal, and
wherein the first backup controller is configured to issue the first backup command and the second backup command when the secondary controller issues the second fault signal.

12. The system of any of claims 1 to 11, further comprising:
a first auto motor configure to provide a first mechanical power to cause operation of the first valve when the first valve control system provides the first command to the first auto controller;
a first backup motor configured to provide a second mechanical power to cause operation of the first valve when the first valve control system provide the second command to the first backup controller;
a second auto motor configure to provide a third mechanical power to cause operation of the second valve when the second valve control system provides the third command or the fourth command to the second auto controller; and
a second backup motor configured to provide a fourth mechanical power to cause operation of the second valve when the first backup controller provides the second backup command to the second backup controller.

13. The system of claim 12, further comprising:
a first gearbox configured to receive the first mechanical power and the second mechanical power, wherein the first gearbox is configured to operate the first valve when the first gearbox receives at least one of the first mechanical power or the second mechanical power; and
a second gearbox configured to receive the third mechanical power and the fourth mechanical power, wherein the second gearbox is configured to operate the second valve when the second gearbox receives at least one of the third mechanical power or the fourth mechanical power.

14. The system of any of claims 1 to 13,
wherein the primary controller is one of a first cabin pressure control system (CSPS-1) or a second cabin pressure control system (CSPS-2) and the secondary controller is the other of the CSPS-1 or the CSPS-2,
wherein the CSPS-1 is configured to operate as the primary controller when the CSPS-2 operates as the secondary controller and the CSPS-2 is configured to operate as the primary controller when the CSPS-1 operates as the secondary controller,
wherein the first valve is one of first outflow valve (OFV-1) or a second outflow valve (OFV-2) and the second valve is the other of the OFV-1 or the OFV-2,
wherein the first valve control system is one of a first valve operation system (VO-1) configured to operate the OFV-1 or a second valve operation system (VO-2) configured to operate the OFV-2 and the second valve control system is the other of the VO-1 or the VO-2,
wherein the VO-1 is configured to operate as the first valve control system and the VO-2 is configured to operate as the second valve control system when the CSPS-1 operates as the primary controller and the CSPS-2 operates as the secondary controller, and
wherein the VO-2 is configured to operate as the first valve control system and the VO-1 is configured to operate as the second valve control system when the CSPS-2 operates as the primary controller and the CSPS-1 operates as the secondary controller.

15. A method, comprising:
operating, by a first valve control system, a first valve by one of providing a first command issued by a primary controller to a first auto controller or providing a second command issued by a secondary controller to a first backup controller;
operating, by a second valve control system, a second valve by one of providing a third command issued by the primary controller to a second auto controller or providing a fourth command issued by the secondary controller to a first backup controller,
wherein the first valve control system provides the second command and the second valve control system provides the fourth command if at least one of:
the primary controller fails to send the first command or fails to send the third command,
the first command fails cause the operation of the first valve,
the third command fails to cause the operation of the second valve; and
operating, using the first backup controller, the first valve using a first backup command issued by the first backup controller and the second valve using a second backup command issued by the first backup controller if at least one of:
the secondary controller fails to send the second command or fails to send the fourth command,
the second command fails to cause the operation of the first valve,
the fourth command fails to cause the operation of the second valve,
wherein the first backup controller is configured to operate the first valve using the first backup command the second backup controller is configured to operate the second valve using the second backup command.
